# EUROPÄISCHE PATENTSCHRIFT

(11) **EP 1 716 327 B1**
(45) Veröffentlichungstag und Bekanntmachung des Hinweises auf die Patenterteilung: **09.01.2008**
(21) Anmeldenummer: 05701568.7
(22) Anmeldetag: 20.01.2005
(51) Int. Cl.: F02C 3/30, F02C 9/26, F02M 69/18

(54) **FÖRDERVORRICHTUNG**
CONVEYOR DEVICE
DISPOSITIF DE REFOULEMENT

(30) Priorität: 28.01.2004 DE 102004004135
(43) Veröffentlichungstag der Anmeldung: 02.11.2006
(73) Patentinhaber: Alstom Technology Ltd, 5400 Baden (CH)
(72) Erfinder: LECHELER, Stefan, 83646 Bad Tölz (DE); DITTMANN, Rolf, 5415 Nussbaumen (CH)
(86) Internationale Anmeldenummer: PCT/EP2005/050236
(87) Internationale Veröffentlichungsnummer: WO 2005/073538

(56) Entgegenhaltungen:
- EP-A- 0 990 780
- EP-A- 1 365 127
- US-A- 4 200 073
- US-A- 4 635 606
- US-A1- 2003 192 300
- US-B1- 6 209 310
- US-B1- 6 526 742

## Beschreibung

### Technisches Gebiet

Die Erfindung betrifft eine Vorrichtung gemäß dem Oberbegriff des Anspruchs 1.
Ferner betrifft die Erfindung ein Verfahren gemäß dem Oberbegriff des unabhängigen Verfahrensanspruchs.

### Stand der Technik

Gasturbinen werden heutzutage sowohl leistungsoptimiert als auch wirkungsgradoptimiert ausgelegt. Daher verfügen heutige Gasturbinen üblicherweise über nur sehr geringe, über die Nennleistung hinausreichende Leistungsreserven.
Um dennoch eine kurzzeitige oder auch länger andauernde Leistungssteigerung über die Nennleistung der Gasturbine hinaus zu erzielen, kann Wasser oder eine sonstige geeignete Flüssigkeit in die Verdichterströmung einer Gasturbine eingespritzt oder eingedüst werden. Die hierdurch erzielte Leistungssteigerung ist darin begründet, daß die Flüssigkeit nach der Eindüsung verdampft und hierdurch der durch den Verdichter strömenden Luft Wärme entzogen wird. Dieser kontinuierlich ablaufende Verdampfungsvorgang stellt gleichsam eine kontinuierliche Zwischenkühlung der Verdichterströmung dar und führt dazu, daß zur Verdichtung der Verdichterströmung auf ein vorgegebenes Druckverhältnis eine geringere Verdichterarbeit aufzubringen ist, als dies ohne die Einbringung von Wasser erforderlich wäre. Gleichzeitig wird der Luftmassendurchsatz durch den Verdichter erhöht. Bei konstanter Brennkammeraustrittstemperatur der steht somit eine höhere Nettoleistung zur Verfügung, die beispielsweise als Wellenleistung genutzt wird. Solche Einspritzungen von Wasser sind beispielsweise aus den Druckschriften DE 25 49 790 oder auch FR 1 563 749 bekannt.

Es ist bekannt, Wasser oder eine andere geeignete Flüssigkeit, insbesondere Mischungen von Wasser und Additiven, beispielsweise Wasser-Alkohol-Mischungen, stromauf des Verdichters oder zwischen zwei Verdichterschaufelreihen einzubringen. Bei der Eindüsung stromauf des Verdichters befindet sich die Eindüsungsvorrichtung stromauf der ersten Verdichterstufe.

Die US 2003/0046937 offenbart ein System zur Versorgung einer Gasturbine mit Brennstoff und zur Überwachung bzw. die Steuerung des Brennstoffstroms von einer Brennstoffquelle in eine Gasturbine. Dabei wird die Flussrate des Brennstoffs durch die Variation einer Durchstromöffnung eines Dosierventils kontrolliert. Ist das Dosierventil auf diese Weise nicht steuerbar, schaltet sich ein zweiter Überwachungsweg ein, indem der Fluss über ein zweites Dosierventil gesteuert wird.

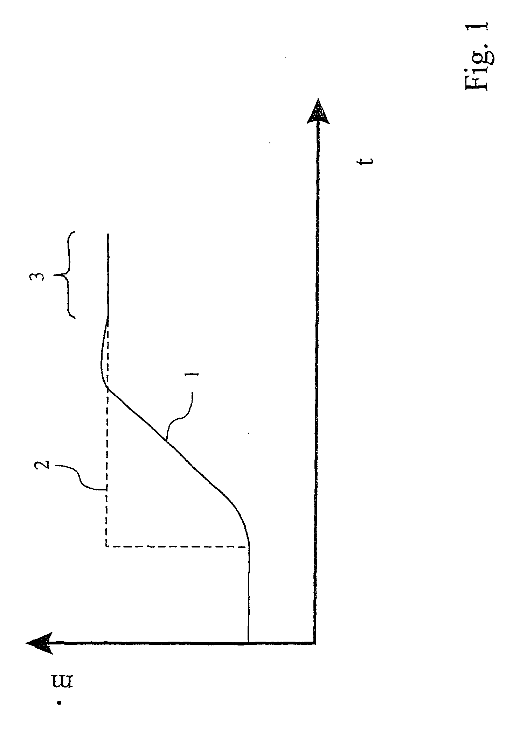

Aus Gründen der Einfachheit und Effizienz werden neben hilfsmedienunterstützten Zerstäuberdüsen, z.B. luftunterstützte Zerstäubungsdüsen, sogenannte Airblast-Zerstäuber, häufig Druckzerstäuberdüsen zur Eindüsung des Wassers verwendet. Bei Druckzerstäubung wird der Zerstäubungsvordruck vorzugsweise näherungsweise konstant gehalten oder nur innerhalb enger Grenzen variiert, weil dies das erzeugte Tropfenspektrum maßgeblich beeinflusst. Um den eingedüsten Massenstrom zu variieren, werden hier häufig Düsengruppen zu- oder abgeschaltet. Der sprungartig veränderte Soll-Massenstrom kann von einer Pumpe oder einer sonstigen Fördereinrichtung jedoch nur zeitverzögert bereitgestellt werden. Dies ist in Figur 1 schematisch dargestellt: Wenn eine Anzahl Zerstäuberdüsen zusätzlich mit Flüssigkeit beaufschlagt wird, so resultiert unter der Voraussetzung gleichbleibenden Zerstäubungsvordrucks ein Sollwertverlauf gemäss der mit 2 gekennzeichneten Kurve. Aufgrund der Trägheit der Pumpe ergibt sich aber ein Ist-Verlauf gemäss 1. Daraus resultiert ein temporärer Einbruch des Zerstäubungsvordrucks, und ein Zeitraum, in dem zu grosse Tropfen erzeugt werden.

Eine vollkommen analoge Situation stellt sich ein, wenn mittels einer erhöhten Einspritzmenge ein sehr schneller Leistungsgradient der Gasturbogruppe erbracht werden soll, wie beispielsweise im Frequenzstützungsbetrieb. Dabei wird der Massenstrom langsamer erhöht als gemäss der Soll-Vorgabe, woraus eine verzögerte Leistungssteigerung resultiert. Diese Problematik stellt sich bei Verwendung von Druckzerstäuberdüsen und hilfsmedienunterstützten Zerstäubern gleichermassen ein.

### Darstellung der Erfindung

Der Erfindung liegt somit die Aufgabe zugrunde, eine Vorrichtung der eingangs genannten Art anzugeben, welche die Nachteile des Standes der Technik zu vermeiden vermag. Insbesondere soll eine Vorrichtung zum nichtintermittierenden, kontinuierlichen Fördern und Einbringen einer Flüssigkeit in eine Hauptströmung zur Verfügung gestellt werden, die bei Veränderung des einzubringenden Massenstroms, beispielsweise durch ein Zuschalten weiterer Düsen, diesen veränderten Massenstrom im Wesentlichen verzögerungsfrei zur Verfügung stellt. Ferner ist es eine Aufgabe der Erfindung, ein Verfahren zum nichtintermittierenden, kontinuierlichen Fördern und Einbringen einer Flüssigkeit in eine Hauptströmung zur Verfügung zu stellen.

Diese Aufgabe wird erfindungsgemäß durch die Vorrichtung gemäss Anspruch 1 sowie durch das Verfahren gemäß Anspruch 12 gelöst. Weitere vorteilhafte Ausgestaltungen der Erfindung finden sich in den Unteransprüchen.

Die erfindungsgemäße Vorrichtung zum kontinuierlichen Fördern und nichtintermittierenden Einbringen einer Flüssigkeit in eine Hauptströmung, vorzugsweise in eine Gasströmung, umfasst eine Zulaufleitung, eine Förderleitung, eine Fördereinrichtung zur Förderung eines Massenstroms der Flüssigkeit von der Zulaufleitung zur Förderleitung sowie wenigstens ein mit der Förderleitung kommunizierendes Zerstäubungselement. Ferner ist erfindungsgemäß in Förderrichtung stromab der Fördereinrichtung und stromauf des Zerstäubungselementes eine Abzweigleitung, die von der Förderleitung abzweigt, angeordnet, wobei in Verbindung mit der Abzweigleitung wenigstens ein Umschalt- und/oder Stellorgan zum Absperren und/oder Drosseln der Abzweigleitung angeordnet ist.

In der Förderleitung ist eine Druckmessstelle angeordnet. Der mittels der Druckmessstelle gemessene Druck in der Förderleitung wird mittels eines Hochpassfilters gefiltert und anschließend einem ersten Druckregler als Regelgröße zugeführt. Der erste Druckregler wiederum regelt als Stellgröße die Stellung eines in der Abzweigleitung angeordneten Stellorgans. Zusätzlich ist weiterhin ein zweiter Druckregler mit dem gemessenen, über einen Tiefpassfilter gefilterten Druck als Regelgröße und der Stellung eines Leistungsreglers der Fördereinrichtung beschaltet. Hochfrequente Drucksprünge, wie diese beispielsweise beim Zu- oder Abschalten von Düsen oder Düsengruppen auftreten, werden über den Hochpassfilter dem regelbaren Stellorgan beaufschlagt und führen hier zu einer Anpassung der Stellung des Stellorgans, um die hochfrequenten Drucksprünge zu kompensieren. Umgekehrt wirken niederfrequente Druckänderungen auf die Stellung des Leistungsreglers der Fördereinrichtung.

An dieser Stelle soll die im Rahmen dieser Beschreibung benutzte Nomenklatur bezüglich Fördervorrichtung und Fördereinrichtung erläutert werden. Unter einer Fördereinrichtung ist ein Element wie ein Pumpe oder ein System zu verstehen, welches einen Flüssigkeitsmassenstrom fördert. Unter der Fördervorrichtung ist das gesamte System einschliesslich Rohrleitungen, Stellorganen, der Fördereinrichtung und dergleichen Komponenten zu verstehen.

Ein hervorzuhebender Gedanke der Erfindung ist es also, eine Abzweigleitung mit einem Umschalt- und/oder Stellorgan so anzuordnen, daß über die Abzweigleitung nach Bedarf wenigstens ein Teil des von der Fördereinrichtung geförderten Flüssigkeitsmassenstroms abgezweigt werden kann. Damit ist es möglich, die Fördereinrichtung auch dann konstant, d.h. stationär, zu betreiben, wenn sich der zu zerstäubende Flüssigkeitsmassenstrom ändert. Die Fördereinrichtung fördert somit einen konstanten Flüssigkeitsmassenstrom, während der über das Zerstäubungselement zerstäubte Flüssigkeitsmassenstrom veränderlich ist. Die erfindungsgemäße Fördervorrichtung ermöglicht, den Flüssigkeitsmassenstrom, der dem Zerstäubungselement zugeführt wird, praktisch ohne Zeitverzögerung zu erhöhen oder zu vermindern.

Gemäß einer vorteilhaften Ausgestaltung der Erfindung ist das Umschalt- und/oder Stellorgan ein Wegeventil, das zweckmäßig an der Abzweigstelle angeordnet ist. Das Wegeventil ist gemäss einer Ausführungsform so ausgeführt, daß die Ausgänge kontinuierlich, das heißt im Wesentlichen stufenlos, freigeschaltet werden können. Hierbei kann es durchaus zweckmäßig sein, wenn die Ausgänge des Wegeventils nur abhängig voneinander geschaltet werden können. Beispielsweise kann ein Schaltkolben des Wegeventils stufenlos und somit kontinuierlich verschiebbar sein. Durch Verschieben des Schaltkolbens in eine Richtung wird der eine Ausgang zunehmend freigegeben, während der andere Ausgang zunehmend verschlossen wird. Umgekehrt wird der andere Ausgang zunehmend freigegeben und der eine Ausgang zunehmend verschlossen, wenn der Schaltkolben in die andere Richtung bewegt wird.
Gemäss einer anderen Ausführungsform ist als Umschalt- und/oder Stellorgan ein Wegeventil mit einer diskontinuierlichen, binären Umschaltfunktion angeordnet.
Das Umschalt- oder Stellorgan kann weiterhin auch ein Absperrelement oder ein Drosselelement, beispielsweise ein Schiebeelement, sein.

Die erfindungsgemäße Vorrichtung eignet sich insbesondere zur Verwendung in einer Wärmekraftmaschine, insbesondere in einer luftatmenden Verbrennungskraftmaschine, beispielsweise einer Gasturbogruppe. Das wenigstens eine mit der Förderleitung kommunizierende Zerstäubungselement ist zum Einbringen der Flüssigkeit in die Hauptströmung der Wärmekraftmaschine vorzugsweise in einem Zuströmkanal der Wärmekraftmaschine angeordnet. Dem kontinuierlichen Arbeitsprozess einer Gasturbogruppe entsprechend strömt die Hauptströmung längs eines Hauptströmungspfades kontinuierlich durch die Wärmekraftmaschine. Somit ist es auch erforderlich, die Flüssigkeit nichtintermittierend in die Hauptströmung einzubringen.
Insbesondere zur Leistungssteigerung einer Gasturbogruppe ist das wenigstens eine mit der Förderleitung kommunizierende Zerstäubungselement zweckmäßig stromauf einer Verdichterstufe angeordnet. Mittels der erfindungsgemäßen Vorrichtung kann so beispielsweise hochreines Wasser in den Verdichter einer Gasturbinenanlage eingebracht werden. Neben Wasser kann als Flüssigkeit aber auch ein Gemisch aus Wasser und einem weiteren Zusatzstoff oder auch eine andere geeignete Flüssigkeit eingebracht werden.
Unter dem Begriff "Einbringen einer Flüssigkeit" ist sowohl ein Eindüsen oder Zerstäuben der Flüssigkeit als auch ein Einspritzen oder sonstiges Injizieren der Flüssigkeit in eine Hauptströmung zu verstehen.
Das Einbringen der Flüssigkeit in die Hauptströmung erfolgt nichtintermittierend, d.h. kontinuierlich. Das Zerstäubungselement umfasst demgemäss keine Verschlussmittel zum Verschließen einer Durchtrittsöffnung des Zerstäubungselements, durch die die Flüssigkeit aus dem Zerstäubungsmittel in die Hauptströmung eingebracht wird. Solche Verschlussmittel sind aus dem Stand der Technik bekannt, um die Durchtrittsöffnung intermittierend öffnen und wieder schließen zu können, und so die Flüssigkeit intermittierend in die Hauptströmung einzubringen.
Um die Flüssigkeit mittels Zerstäubung nichtintermittierend in die Hauptströmung einbringen zu können, ist es erforderlich, einen kontinuierlichen Flüssigkeitsmassenstrom zur Zerstäubung bereitzustellen. Neben der Bereitstellung eines kontinuierlichen Flüssigkeitsmassenstroms ist es insbesondere bei Verwendung von Druckzerstäuberdüsen überdies wünschenswert, den in der Förderleitung vor dem Zerstäubungselement anliegenden Flüssigkeitsdruck über die Einbringdauer zeitlich weitgehend konstant zu halten. Nur bei einem zeitlich konstanten Vordruck ist eine fortwährend gute Zerstäubung der Flüssigkeit über Druckzerstäuberdüsen gewährleistet. Der optimale Vordruck ist hierbei anlagenspezifisch insbesondere in Abhängigkeit des Zerstäubungsmittels und des Gegendrucks zu wählen. Fällt der Vordruck unter diesen Wert, so wird die Flüssigkeit nur unzureichend zerstäubt.
Im Gegensatz hierzu schwankt bei intermittierender Zerstäubung bzw. Eindüsung einer Flüssigkeit der vor dem Zerstäubungselement anliegende Flüssigkeitsdruck als Folge eines jeden Einzelzerstäubungsvorgangs grundsätzlich jeweils erheblich um einen Mittelwert. Der Vorgang einer intermittierenden Zerstäubung bzw. Eindüsung von Flüssigkeit unterteilt sich in mindestens drei Phasen, nämlich eine erste Phase, während der sich eine Durchtrittsöffnung des Zerstäubungsmittels öffnet, wobei hier bereits Flüssigkeit durch die sich öffnende Durchtrittsöffnung hindurchtritt und zerstäubt wird. In einer nachfolgenden Phase erfolgt dann eine Zerstäubung bei konstant geöffneter Durchtrittsöffnung, wobei hier jedoch üblicherweise der Vordruck abfällt. Schließlich wird die Durchtrittsöffnung in einer letzten Phase der intermittierenden Zerstäubung geschlossen. Eine Abweichung des Vordrucks von einem idealen Vordruck wirkt sich im Falle einer intermittierenden Eindüsung somit weniger stark auf die Qualität der Zerstäubung der Flüssigkeit aus als dies bei nichtintermittierender Eindüsung der Fall ist.

Die erfindungsgemässe Vorrichtung zeichnet sich dadurch aus, dass die Fördereinrichtung stationär oder quasistationär betrieben werden kann, d.h. die Fördereinrichtung fördert kontinuierlich Flüssigkeit aus der Zulaufleitung in die Förderleitung. Kontinuierlich bedeutet hierbei, daß die Fördereinrichtung keine plötzlichen Massenstromsprünge liefert. Der von der Fördereinrichtung bereitgestellte Massenstrom bleibt demgemäss auch bei einem Zuschalten oder Abschalten von Zerstäubungsmitteln, beispielsweise von Düsen oder Düsengruppen, und einem hieraus resultierenden, sprungartig erhöhten oder verminderten Flüssigkeitsmassendurchsatzes praktisch konstant. Eine langsame Erhöhung oder Verminderung der Fördermenge der Fördereinrichtung im Anschluß an eine sprungartige Veränderung des Flüssigkeitsmassendurchsatzes, um so die aktuelle Fördermenge an den jeweils erforderlichen Flüssigkeitsmassendurchsatz anzupassen und die Fördereinrichtung somit angepasst zu betreiben, ist von der Erfindung mit eingeschlossen. Die Einstellung des tatsächlich dem wenigstens einen Zerstäubungsmittel zuzuführenden Massenstroms erfolgt durch eine geregelte Ableitung des überschüssig geförderten Flüssigkeitsmassenstroms über die Abzweigleitung. Wird beispielsweise die Abzweigleitung vollständig geöffnet, strömt ein großer Teil, im Extremfall der gesamte durch die Fördereinrichtung geförderte Flüssigkeitsmassenstrom, in die Abzweigleitung. Der Massenstrom in der Förderleitung stromab der Abzweigung der Abzweigleitung ist somit klein. Wird umgekehrt die Abzweigleitung vollständig geschlossen, so verbleibt der gesamte, von der Fördereinrichtung geförderte Flüssigkeitsmassenstrom in der Förderleitung und gelangt zu dem Zerstäubungselement. Je nach Öffnungsgrad der Abzweigleitung lassen sich auch Zwischenwerte der Massenstromverteilung einstellen.
Um den Massenstrom der Flüssigkeit in der Förderleitung stromab der Abzweigung der Abzweigleitung zu verändern, ist es somit nicht mehr erforderlich, den Betriebspunkt der Fördereinrichtung zu verändern. Dies stellt einen bedeutenden Vorzug der Erfindung im Vergleich zu aus dem Stand der Technik bekannten Vorrichtungen dar. Die zweckmäßig als Pumpe ausgeführte Fördereinrichtung kann somit unabhängig von dem geforderten Massenstrom kontinuierlich, d.h. beispielsweise mit konstanter Drehzahl, betrieben werden. Die Fördereinrichtung kann somit wesentlich gleichmässiger betrieben werden, ohne steile Gradienten oder gar Unstetigkeiten der Massenstrom- und/oder Drucksollwerte unmittelbar nachvollziehen zu müssen. Eine Veränderung des Sollmassenstroms und/oder des Drucks in der Förderleitung in Strömungsrichtung hinter der Abzweigung der Abzweigleitung wird erfindungsgemäss zunächst allein durch Veränderung des Öffnungsgrades der Abzweigleitung bewirkt.
Eine solche Veränderung des Öffnungsgrades kann beispielsweise mittels eines Schieberelements sehr schnell und somit näherungsweise ohne Anlaufverzögerung vorgenommen werden. Auffüllvorgänge zur Auffüllung der Leitungen mit Wasser bei Druckerhöhung oder auch Entleerungsvorgänge der Leitungen bei Verminderung des Drucks führen zwar noch zu geringen Reaktionsverzögerungen, die aber im Vergleich beispielsweise zu Anlauf- und Reaktionszeiten einer Pumpe deutlich reduziert sind.

In einer vorteilhaften Weiterbildung der Erfindung wird die Fördereinrichtung bei Veränderung der Massenstrom- und/oder Drucksollwerte sukzessive auf einen neuen, der aktuellen Leistungsanforderung angepassten Betriebszustand gebracht. In der Regel ist hierbei zu beachten, daß der Betriebspunkt der Fördereinrichtung vorzugsweise so gewählt wird, daß immer ein größerer Massenstrom gefördert wird als zerstäubt wird. Dies bedeutet, daß immer eine gewisse Regelmarge zur Verfügung steht. Bei Bedarf kann der Massenstrom somit durch Nutzung dieser Regelmarge jederzeit schnell erhöht werden. Wie groß die Regelmarge zu wählen ist, ist unter Berücksichtigung der zu erwartenden Massenstromveränderungen und unter wirtschaftlichen Gesichtspunkten anlagenspezifisch festzulegen.

Um eine sukzessive Anpassung des Betriebszustands an veränderte Leistungsanforderungen zu ermöglichen, ist in einer zweckmäßigen Ausgestaltung der Erfindung in der Förderleitung stromab der Abzweigstelle eine Druckmessstelle zur Messung des Flüssigkeitsdrucks angeordnet. Weiterhin ist in dieser zweckmäßigen Ausgestaltung ein Regler mit dem gemessenen Druck als Regelgrösse und der Stellung des Umschalt- und/oder Stellorgans als Stellgrösse beschaltet. Sinkt der in der Förderleitung hinter der Abzweigstelle anliegende Druck, so regelt der Regler die Stellung des Umschalt- und/oder Stellorgans so, daß ein geringerer Anteil des Flüssigkeitsmassenstroms durch die Abzweigleitung abgeführt wird. Steigt umgekehrt der in der Förderleitung hinter der Abzweigstelle anliegende Druck, so regelt der Regler die Stellung des Umschalt- und/oder Stellorgans so, daß ein größerer Anteil des Flüssigkeitsmassenstroms durch die Abzweigleitung abgeführt wird.

In einer hierzu alternativen, zweckmäßigen Ausgestaltung der Erfindung ist in der Förderleitung stromab der Abzweigstelle eine Messstelle für einen Flüssigkeitsmassenstrom angeordnet. Weiterhin ist ein Regler mit dem gemessenen Massenstrom als Regelgrösse und der Stellung des Umschalt- und/oder Stellorgans als Stellgrösse beschaltet. Sinkt der Flüssigkeitsmassenstrom in der Förderleitung stromab der Abzweigstelle unter einen Sollwert, so regelt der Regler die Stellung des Umschalt- und/oder Stellorgans so, daß ein geringerer Anteil des Flüssigkeitsmassenstroms durch die Abzweigleitung abgeführt wird. Steigt umgekehrt der Flüssigkeitsmassenstrom in der Förderleitung stromab der Abzweigstelle über den Sollwert, so regelt der Regler die Stellung des Umschalt- und/oder Stellorgans so, daß ein größerer Anteil des Flüssigkeitsmassenstroms durch die Abzweigleitung abgeführt wird.

Bei Verwendung der erfindungsgemäßen Fördervorrichtung in einer Flüssigkeitseinspritzanlage zur Eindüsung von Wasser in den Verdichterzuströmkanal einer Gasturbogruppe läßt sich somit über den gesamten Betriebsbereich und auch im Frequenzstützungsbetrieb eine sehr gute Zerstäubung des Wassers erzielen. Insbesondere dann, wenn zur Erhöhung des einzudüsenden Wassermassenstroms beispielsweise weitere Zerstäubungselemente hinzugeschaltet werden, die über dieselbe Förderleitung mit Wasser versorgt werden, kann mittels der erfindungsgemäßen Vorrichtung ein Absinken des Drucks in der Förderleitung aufgrund des erhöhten Wassermassenstrombedarfs vermieden werden. Als Reaktionszeit zur Reaktion auf ein Zuschalten weiterer Zerstäubungselemente ist hier lediglich die Verstellzeit des Umschalt- und/oder Stellorgans zu berücksichtigen. Diese Reaktionszeit kann beispielsweise bei Schiebeelementen in einem Bereich kleiner einer Sekunde oder im Bereich weniger Sekunden liegen, so daß hier praktisch keine Reaktionsverzögerung gegeben ist.
Dies gilt sowohl bei Verwendung von Druckzerstäuberdüsen als Zerstäubungselemente als auch bei hilfsmedienunterstützten Zerstäuberdüsen, beispielsweise luftunterstützten Zerstäuberdüsen, sogenannten Airblast-Zerstäubern. Zweckmäßig sind hierbei eine Mehrzahl von Zerstäubungsdüsen üblicherweise in jeweils einem Düsenträger angeordnet, wobei der Düsenträger mit der Förderleitung verbunden ist. Die auf einem Düsenträger angeordneten Zerstäubungsdüsen sind vorzugsweise einzeln oder in Gruppen selektiv mit Flüssigkeit beaufschlagbar.

In einer Ausführungsform der Erfindung verzweigt die Förderleitung stromab der Abzweigung der Abzweigleitung in eine Mehrzahl von Einzel-Förderleitungen. Dabei ist jede Einzel-Förderleitung mit wenigstens einem Zerstäubungselement, beispielsweise einer Düse, oder mit einem mit mehreren Zerstäubungselementen versehenen Düsenträger verbunden. Dies ermöglicht, daß eine Mehrzahl von Düsen oder Düsengruppen über nur eine Fördereinrichtung, beispielsweise eine Pumpe, mit Flüssigkeit versorgt werden. Die mit der Pumpe verbundene Förderleitung sowie die jeweils betreffende Einzel-Förderleitung bilden somit hier gesamthaft die Förder- bzw. Versorgungsleitung für das angeschlossene Düsenelement oder den angeschlossenen Düsenträger. Zusätzlich ist in wenigstens einer, vorzugsweise in jeder Einzel-Förderleitung ein Absperrorgan angeordnet, so daß die betreffenden Einzel-Förderleitungen jeweils mittels dem Absperrorgan individuell vollständig und/oder teilweise freigegeben oder verschlossen werden können.

In einer weiteren zweckmäßigen Ausgestaltung der Erfindung verzweigt die Förderleitung stromauf der Abzweigung der Abzweigleitung von der Förderleitung in eine Mehrzahl von Einzel-Förderleitungen, wobei wenigstens eine der Einzel-Förderleitungen mit einem Zerstäubungselement verbunden ist. Von wenigstens einer Einzel-Förderleitung, vorzugsweise von jeder Einzel-Förderleitung, zweigt jeweils eine Einzel-Abzweigleitung ab, die zweckmäßig jeweils über ein in die Einzel-Förderleitung oder die Einzel-Abzweigleitung integriertes Umschalt- und/oder Stellorgan, beispielsweise ein Absperr- oder Drosselelement oder ein Mehrwege-Schaltelement, zumindest teilweise verschließbar ist. Ferner kann zweckmäßig zusätzlich in jeder Einzel-Förderleitung stromab der Abzweigung der Abzweigleitung von der Förderleitung ein Absperrorgan in der Förderleitung angeordnet sein. Besonders vorteilhaft sind alle Umschalt- und/oder Stellorgane selektiv und individuell schaltbar. Die mit der Pumpe verbundene Förderleitung sowie die jeweils betreffende Einzel-Förderleitung bilden jeweils gesamthaft die Förder- bzw. Versorgungsleitung für das angeschlossene Düsenelement oder den angeschlossenen Düsenträger.
Ist zur sukzessiven Anpassung des Betriebszustands an veränderte Leistungsanforderungen gemäß der oben beschriebenen zweckmäßigen Ausführungsform eine Druckmessstelle in der Förderleitung vorzusehen, so ist diese bei Aufteilung der Förderleitung in eine Mehrzahl von Einzel-Förderleitungen zweckmäßig stromauf der Verzweigung anzuordnen. Dies ermöglicht eine Regelung des Flüssigkeitsdrucks gemeinsam für alle Einzel-Förderleitungen. Gleiches gilt bei Massenstromregelung.
In einer erfindungsgemässen Vorrichtung mit weitergebildeter Druck- oder Massenstromregelung ist eine drosselbare Rücklaufleitung, die stromauf der Verzweigung in Einzel-Förderleitungen von der Förderleitung abzweigt und in die Zulaufleitung zurückführt, angeordnet, und die Fördereinrichtung ist regelbar, beispielsweise als drehzahlregelbare Pumpe, ausgeführt.

Die von einer Förderleitung abzweigende Abzweigleitung ist zweckmäßig mit einem lichten Querschnitt entsprechend dem 0,7-fachen bis 1,5-fachen der kumulierten Querschnitte der Öffnungen der an die jeweilige Förderleitung angeschlossenen Zerstäubungselemente, bevorzugt dem 0,9-fachen bis 1,2-fachen und besonders bevorzugt gleich den kumulierten Querschnitten ausgeführt. Der lichte Querschnitt bezieht sich auch auf in die Abzweigleitung integrierte Umschalt- und/oder Stellorgane, d.h. der lichte Querschnitt bemisst sich an der engsten Stelle innerhalb der Abzweigleitung inklusive der in der Abzweigleitung angeordneten Umschalt- und/oder Stellorgane. Somit kann die Abzweigleitung auch mit einem größeren lichten Querschnitt ausgeführt sein, sofern ein Umschalt- und/oder Stellorgan einen maximalen lichten Querschnitt in dem aufgeführten Bereich freigibt.

Gemäss einer Ausführungsform ist des Weiteren stromab der Abzweigung der Abzweigleitung von der Förderleitung und stromauf eines Düsenelementes in der Förderleitung ein Absperrorgan, vorzugsweise ein 2/2-Wege-Ventil, angeordnet. Dieses Absperrorgan dient dazu, die Förderleitung in Richtung des Düsenelements zu verschließen. Sind mehrere Düsenelemente oder Düsengruppen an eine Förderleitung angeschlossen, so ist gemäss einer Ausführungsform ein Absperrorgan zwischen den Düsenelementen oder Düsengruppen angeordnet, um die Düsenelemente oder Düsengruppen selektiv zu- bzw. abschalten zu können.

Vorzugsweise mündet die Abzweigleitung wieder in die Zulaufleitung. Ist die Zulaufleitung mit einem Reservoir, beispielsweise mit einem Wassertank, verbunden, mündet die Abzweigleitung vorteilhaft in das Reservoir. Die über die Abzweigleitung aus der Förderleitung abgezweigte Flüssigkeit rezirkuliert somit und wird im weiteren wiederverwendet. Mit Vorteil sind in dem Zirkulationspfad geeignete Mittel zur Rückkühlung der rezirkulierten Flüssigkeit angeordnet. Die Flüssigkeit kann über die Abzweigleitung prinzipiell aber auch einem anderen Nutzungszweck zugeführt werden.

In einer Ausgestaltung der Erfindung ist die Abzweigung der Abzweigleitung von der Förderleitung als T-Element oder T-Rohrelement oder als ein anderweitiges rohrähnliches Verzweigungselement ausgeführt. "T-Element" bezeichnet hierbei ein Verzweigungselemente, bei denen ein Abzweigelement von einer Hauptleitung abzweigt. Der Winkel zwischen Abzweigelement und Hauptleitung kann, aber muß nicht unbedingt 90° betragen.
Bei Ausführung der Abzweigleitung als T-Element ist in der Abzweigleitung ein Stellorgan angeordnet, um die Abzweigleitung zumindest teilweise verschließen zu können. Gemäss einer Ausführungsform läßt sich das Stellorgan stufenlos öffnen und schließen. Aufgrund ihrer sehr schnellen Ansprechzeiten eignen sich beispielsweise Magnetventile zur Verwendung als Stellorgan.

Alternativ kann die Abzweigung der Abzweigleitung von der Förderleitung als Mehr-Wege-Schaltelement, vorzugsweise als 3/2-Wege-Ventil, ausgeführt sein, bei dem die Ausgänge unabhängig voneinander geöffnet und geschlossen werden können. Gemäss einer Ausführungsform lassen sich die Ausgänge des Mehr-Wege-Schaltelements stufenlos öffnen und schließen. In einer anderen Ausführungsform ist die Abzweigung der Abzweigleitung von der Förderleitung als Umschaltorgan ausgeführt, das ermöglicht, den zuströmenden Flüssigkeitsmassenstrom wahlweise dem Zerstäubungselement zuzuführen oder in die Abzweigleitung zu führen. Dieses Umschaltorgan kann mit einer kontinuierlichen oder einer diskontinuierlichen Umschaltfunktion ausgeführt sein.

In einer weiteren zweckmäßigen Ausgestaltung der Erfindung werden die Umschalt- und/oder Stellorgane sowie zweckmäßig auch die weiteren Absperrorgane von einer zentralen Steuereinheit aus gesteuert. Hiermit können die Umschalt- und/oder Stellorgane sowie die Absperrorgane zeitsynchron und aufeinander abgestimmt angesteuert werden. Die zentrale Steuereinheit wiederum kann mit einer übergeordneten Regelungs- und Steuereinheit, beispielsweise einer zentralen Regelungs- und Steuereinheit der Gasturbogruppe, kommunizieren oder als Teil dieser ausgeführt sein.

In einem weiteren Aspekt stellt die Erfindung ein Verfahren zum kontinuierlichen Fördern und nichtintermittierenden Einbringen eines Flüssigkeitsmassenstroms in eine Hauptströmung speziell einer Kraftmaschine zur Verfügung. Das Verfahren eignet sich insbesondere zum Betreiben der erfindungsgemäßen Vorrichtung. Der Flüssigkeitsmassenstrom wird von einer Fördereinrichtung kontinuierlich gefördert, wobei wenigstens ein Teil des von der Fördereinrichtung geförderten Flüssigkeitsmassenstroms in Förderrichtung stromab der Fördereinrichtung abzweigbar ist. Zur Erhöhung oder Verminderung des in die Hauptströmung einzubringenden Flüssigkeitsmassenstroms um einen Differenzmassenstrom wird erfindungsgemäß der von der Fördereinrichtung geförderte Flüssigkeitsmassenstrom konstant gehalten und der abgezweigte Flüssigkeitsmassenstrom um einen betragsmäßig näherungsweise gleichen Differenzmassenstrom oder in einer zweckmäßigen Ausführung um den betragsmäßig gleichen Differenzmassenstrom mit jedoch umgekehrtem Vorzeichen verändert.
Das erfindungsgemäße Verfahren ermöglicht, den in die Hauptströmung einzubringenden Flüssigkeitsmassenstrom praktisch ohne Zeitverzögerung um einen Differenzmassenstrom zu erhöhen oder zu vermindern. Eine derartige verzögerungsfreie Erhöhung oder Verminderung des in die Hauptströmung einzubringenden Flüssigkeitsmassenstroms ist beispielsweise dann wünschenswert, wenn Düsen oder Düsengruppen, über die die Flüssigkeit in die Hauptströmung eingebracht werden, hinzugeschaltet oder abgeschaltet werden.

Auch wenn der von der Fördereinrichtung geförderte Flüssigkeitsmassenstrom bei Veränderung des einzubringenden Flüssigkeitsmassenstroms erfindungsgemäß in unmittelbarer Reaktion auf die veränderte Massenstromanforderung konstant oder praktisch konstant gehalten wird und eine kurzfristige Anpassung über eine Veränderung des abgezweigten Flüssigkeitsmassenstroms erzielt wird, so ist dennoch eine langsame Erhöhung oder Verminderung der Fördermenge der Fördereinrichtung im Anschluß an eine sprungartige Veränderung des in die Hauptströmung einzubringenden Flüssigkeitsmassendurchsatzes im Rahmen der Erfindung umfasst. Durch langsame Erhöhung oder Verminderung der Fördermenge kann der von der Fördereinrichtung geförderte Flüssigkeitsmassenstrom dem jeweils geforderten einzubringenden Flüssigkeitsmassendurchsatz angepasst werden. Durch dieses Nachregeln der jeweils aktuellen Fördermenge entsprechend dem erforderlichen tatsächlich den Zerstäubungselementen zugeführten Flüssigkeitsmassenstrom ist es möglich, die Regelmarge als den von der Fördereinrichtung überschüssig geförderten Flüssigkeitsmassenstrom im Rahmen der erforderlichen Systemdynamik klein zu halten.

In einer vorteilhaften Weiterbildung des erfindungsgemäßen Verfahrens wird stromab der Abzweigung kontinuierlich ein Druck in der Förderleitung gemessen und dieser Druck über den abgezweigten Flüssigkeitsmassenstrom geregelt. Hierbei ist es üblicherweise zweckmäßig, den Druck in der Förderleitung als Düsenvordruck konstant zu regeln.

In einer weiteren vorteilhaften Weiterbildung des erfindungsgemäßen Verfahrens wird stromab der Abzweigung der Flüssigkeitsmassenstrom gemessen und dieser Flüssigkeitsmassenstrom über den abgezweigten Flüssigkeitsmassenstrom geregelt.

In einer weiteren vorteilhaften Weiterbildung des erfindungsgemäßen Verfahrens wird ein Druck in der Förderleitung gemessen, der gemessenen Druck mit einem Hochpass gefiltert und der hochpass-gefilterte Druck über den abgezweigten Flüssigkeitsmassenstrom geregelt. Zusätzlich wird der gemessene Druck mit einem Tiefpass gefiltert und der tiefpass-gefilterte Druck über den von der Fördereinrichtung geförderten Flüssigkeitsmassenstrom geregelt.

In einer zweckmäßigen Ausgestaltung des erfindungsgemäßen Verfahrens wird der abgezweigte Flüssigkeitsmassenstrom in einer Abzweigleitung geführt. Der abgezweigte Flüssigkeitsmassenstrom wird dann zweckmäßig über die Stellung eines Stellorgans in der Abzweigleitung geregelt.

Zweckmäßig werden zum Verändern des Flüssigkeitsmassenstroms um den Differenzmassenstrom ein oder mehrere Düsengruppen und/oder ein oder mehrere Düsen hinzugeschaltet oder abgeschaltet.

Gemäss einer Ausführungsform wird der Flüssigkeitsmassenstrom-Sollwert und/oder die Anzahl der beaufschlagten Düsenrohre von einem Leistungsregler einer Kraftmaschine eingestellt.

Wird das erfindungsgemäße Verfahren für den Betrieb einer stationären Gasturbine mit Wassereinspritzung im Verdichtereintrittsbereich verwendet, wird das erfindungsgemäße Verfahren gemäss einer zweckmässigen Ausführungsform so ausgeführt, dass ein Differenzmassenstrom von 20% des zu zerstäubenden maximalen Flüssigkeitsmassenstroms in weniger als 3 Sekunden, bevorzugt in weniger als 1 Sekunde für die Einspritzung zur Verfügung gestellt werden kann. Das heisst, die Regelmarge als der über die Abzweigleitung geführte Massenstrom beträgt gemäss dieser Ausführungsform 20% des maximal einzudüsenden Massenstroms.

In einer zweckmäßigen Ausgestaltung des erfindungsgemäßen Verfahrens ist die Förderleitung in Förderrichtung stromab der Abzweigung der Abzweigleitung von der Förderleitung schließbar. Bei Öffnen der Förderleitung wird die Abzweigleitung vorteilhaft zeitgleich um einen gleichwertigen Anteil geschlossen. Umgekehrt wird bei vollständigem oder teilweisem Schließen der Förderleitung die Abzweigleitung um einen gleichwertigen Anteil geöffnet. Der gleichwertige Anteil ergibt sich aus dem zu schaltenden Differenzmassenstrom. Durch ein zeitsynchrones, gleichwertiges Schließen der Abzweigleitung bei Öffnen der Förderleitung und umgekehrt bleibt der Drosselgrad für die Pumpe nahezu konstant. Die Pumpe erfährt somit keine Änderung des Betriebspunktes. Auch erfolgt die Aufteilung der Flüssigkeitsmenge, die durch die Abzweigleitung abgezweigt wird, zu der in der Förderleitung weitergeleiteten Flüssigkeitsmenge nahezu linear in Abhängigkeit lediglich des Öffnungsverhältnisses der Abzweigleitung zu der Förderleitung. Somit lässt sich der Flüssigkeitsmassenstrom, der den Düsen oder Düsengruppen bereitgestellt wird, näherungsweise linear über das Öffnungsverhältnis der Abzweigleitung zu der Förderleitung einstellen.

### Kurze Beschreibung der Zeichnungen

Die Erfindung wird nachfolgend anhand von Ausführungsbeispielen im Zusammenhang mit den Zeichnungen näher erläutert. Es zeigen:
- Figur 1: eine Soll-Ist-Auftragung des zeitlichen Wassermassenstromverlaufs einer herkömmlichen Pump-Fördervorrichtung;
- Figur 2: eine erste Ausführungsform der erfindungsgemäßen Fördervorrichtung;
- Figur 3: die Fördervorrichtung aus Figur 2 mit integrierter Druckregelung;
- Figur 4: die Fördervorrichtung aus Figur 2 mit einer expliziten Massenstromregelung;
- Figur 5: eine zweite Ausführungsform der erfindungsgemäßen Fördervorrichtung;
- Figur 6: eine erste Fördervorrichtung mit einer weitergebildeten Druckregelung;
- Figur 7: eine zweite Fördervorrichtung mit einer weitergebildeten Druckregelung;
- Figur 8: eine dritte Fördervorrichtung mit einer weitergebildeten Druckregelung;
- Figur 9: eine Gasturbinenanlage mit einer Flüssigkeitseinspritzanlage mit erfindungsgemäßer Fördervorrichtung.

In den Figuren sind nur die für das Verständnis der Erfindung wesentlichen Elemente und Bauteile dargestellt. Die dargestellten Ausführungsbeispiele sind rein instruktiv zu verstehen und sollen einem besseren Verständnis, aber nicht zu einer Einschränkung des Erfindungsgegenstandes dienen.

### Wege zur Ausführung der Erfindung

In Figur 1 ist eine Soll-Ist-Auftragung des Wassermassenstroms über der Zeit einer herkömmlichen Pump-Fördereinrichtung dargestellt. Die Soll-Vorgabe 2 ist als Massenstromsprung gestrichelt dargestellt. Ähnlich einer verzögerten Sprungantwort folgt der Ist-Massenstrom 1 der Soll-Vorgabe 2 mit einer deutlichen zeitlichen Verzögerung. Die zeitliche Verzögerung ist dadurch bedingt, daß die Pumpe der herkömmlichen Pump-Fördereinrichtung einen erhöhten Massenstrom nicht beliebig schnell liefern kann. Erst nach einiger Zeit (Zeitbereich 3) stellt sich der gewünschte Massenstrom ein. Wird eine solche herkömmliche Pump-Fördervorrichtung in einer Wassereinspritzanlage einer Gasturbine unter Verwendung von Druckzerstäuberdüsen als Zerstäubungselemente eingesetzt, so wird beispielsweise beim Zuschalten von Düsen oder Düsengruppen von der Pumpe aufgrund der Anlaufverzögerung der Pumpe nach dem Zuschalten ein nicht hinreichender Wassermassenstrom gefördert. Aufgrund des hiermit verbundenen Druckabfalls in der Förderleitung kommt es bei einer Zerstäubung mittels Druckzerstäuberdüsen zu einer nicht optimalen Zerstäubung des eingedüsten oder eingespritzten Wassers. Bei Druckzerstäubern wird der Vordruck üblicherweise nicht oder nur in geringen Grenzen variiert. Daher werden zur Einstellung unterschiedlicher Massenströme Düsen oder Düsengruppen zu- und abgeschaltet. Dies führt zu sprunghaft veränderten Anforderungen an die Massenstrommenge, was aufgrund der Massenstrom-Druck-Korrelation und der begrenzten Fähigkeit einer Pumpe, Massenstrom-Gradienten beliebig bereitzustellen, letztlich zu unerwünschten Druckschwankungen in der Förderleitung führt. Der begrenzte Massenstrom-Gradient kann auch bei luftunterstützten Zerstäubern problematisch sein, weil eben der Massenstrom langsamer verändert wird, als dies beispielsweise zum Erreichen eines geforderten Leitungsgradienten der Gasturbine notwendig wäre. Aufgrund der Trägheit der Pumpe nimmt die Pumpförderleistung erst nach einiger Zeit den gewünschten Wert an. Erst ab diesem Zeitpunkt wird von der Pumpe ausreichend Wasser bereitgestellt. Demgemäß erfolgt auch beim Betrieb der Gasturbine beispielsweise zur Frequenzstützung die angestrebte Leistungserhöhung nur verzögert.

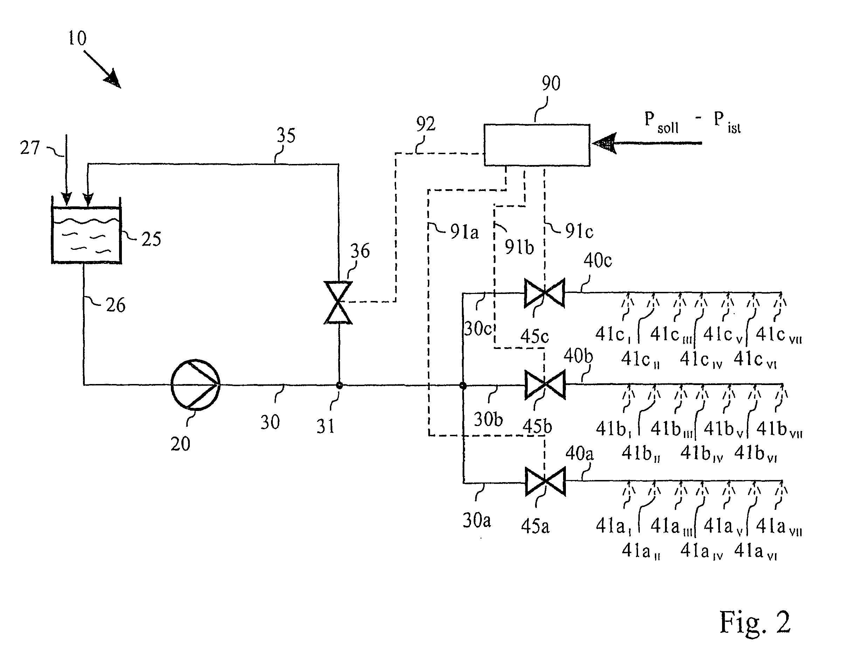

Figur 2 zeigt in einer schematischen Darstellung eine erste Ausführungsform der erfindungsgemäßen Vorrichtung zum Fördern und Zerstäuben einer Flüssigkeit, die im Vergleich zum Stand der Technik einen veränderten Massenstrom praktisch verzögerungsfrei zur Verfügung stellt. Die dargestellte Vorrichtung 10 eignet sich beispielsweise zur Verwendung in einer Flüssigkeitseinspritzanlage zur nichtintermittierenden Eindüsung oder Einspritzung von Wasser in eine Verdichterströmung einer Gasturbinenanlage. Die Vorrichtung 10 umfaßt eine Pumpe 20, die über eine Zulaufleitung 26 mit einem Vorratsbehälter 25, kommuniziert und aus diesem Flüssigkeit ansaugt und kontinuierlich in eine Förderleitung 30 pumpt. Der Vorratsbehälter 25 wiederum wird über eine Zuleitung 27 kontinuierlich oder nach Bedarf mit Flüssigkeit, beispielsweise hochreinem demineralisiertem Wasser aufgefüllt. In Förderrichtung stromab der Pumpe 20 zweigt eine Abzweigleitung 35 zum Ableiten zumindest eines Teils der von der Pumpe geförderten Flüssigkeit von der Förderleitung 30 ab. Die Abzweigleitung führt das abgezweigte Wasser zurück in den Vorratsbehälter 25. In der Abzweigleitung sind mit grösstem Vorteil nicht dargestellte Mittel zur Kühlung des rezirkulierten Fluides angeordnet. Die Abzweigung der Abzweigleitung 35 von der Förderleitung 30 ist als einfaches T-Rohrelement 31 ausgeführt. In der Abzweigleitung 35 ist ferner als Umschalt- und/oder Stellorgan ein 2/2-Wege-Ventil 36 angeordnet, das sich stufenlos öffnen und schließen läßt, um so einen variablen Strömungsquerschnitt freizugeben. Die Abzweigleitung 35 kann mittels des 2/2-Wege-Ventils 36 aber auch vollständig verschlossen werden, so, daß keine Flüssigkeit aus der Förderleitung 30 zurück in den Vorratsbehälter 25 strömen kann. Die Förderleitung 30 unterteilt sich in Strömungsrichtung stromab der Abzweigung 31 der Abzweigleitung 35 von der Förderleitung 30 in drei Einzel-Förderleitungen 30a, 30b und 30c. Jede Einzel-Förderleitung 30a, 30b, 30c ist mit einer Düsengruppe 40a, 40b, 40c verbunden. Jede der in Figur 2 dargestellten Düsengruppen 40a, 40b, 40c weist jeweils 7 Düsenöffnungen 41a_{I}, 41a_{II}, ...41a_{VII}; 41b_{I}, 41b_{II}, ...41b_{VII}; 41c_{I}, 41c_{II}, ...41c_{VII} auf, über die das Wasser in eine Verdichterströmung eingedüst oder eingespritzt wird; diese Anzahl darf selbstverständlich nicht einschränkend verstanden werden. Die Anordnung der Düsengruppen 40a, 40b, 40c auf Düsenrohren ist in Figur 2 nur schematisch wiedergegeben. Die Düsengruppen können beispielsweise auch auf konzentrischen Ringen angeordnet sein. Ebenso kann auch der Strömungsquerschnitt der einzelnen Zuleitungen für die Düsengruppen untereinander sowie auch in Strömungsrichtung variieren. Wie in Figur 2 dargestellt, ist in jeder Einzel-Förderleitung 30a, 30b, 30c des weiteren ein Absperrorgan, hier jeweils ein 2/2-Wege-Ventil 45a, 45b, 45c, angeordnet, das jeweils vollständig geöffnet und geschlossen sowie hier zusätzlich auch stufenlos in Zwischenstellungen gebracht werden kann, um den Massenstrom zu den jeweiligen Zerstäubungselementen oder der jeweiligen Düsengruppe einzustellen. Diese Ausführungsform ist insbesondere bei Verwendung von hilfsmedienunterstützten, insbesondere luftunterstützten, Zerstäuberdüsen von Vorteil. Bei Verwendung von Druckzerstäuberdüsen ist es hingegen ausreichend und sogar höchst zweckmäßig, wenn die 2/2-Wege-Ventile diskontinuierlich wirkende Absperrorgane sind, welche nur eine Offen- und eine Geschlossen-Stellung aufweisen. Zwischenstellungen zur Drosselung des geförderten Flüssigkeitsmassenstroms sind dann nicht erforderlich. Mittels der 2/2-Wege-Ventile werden die Einzel-Förderleitungen 30a, 30b, 30c beispielsweise während des anfänglichen Hochfahrens der Pumpe verschlossen, um zunächst einen hinreichenden Vordruck in der Förderleitung 30 aufzubauen, bevor die Eindüsung der Flüssigkeit gestartet wird. Beim Betrieb der Vorrichtung können mittels der 2/2-Wege-Ventile einzelne Düsengruppen hinzugeschaltet oder abgeschaltet werden. Dies stellt insbesondere bei Verwendung von Druckzerstäuberdüsen, bei denen der Vordruck nur in geringen Grenzen variieren soll, ein gängiges Verfahren dar, um den einzudüsenden Massenstrom zu erhöhen oder zu vermindern. Dieses Zu- oder Abschalten von Düsen oder Düsengruppen führt dazu, dass sprunghaft ein veränderter Massenstrom bereitgestellt werden muss. Aufgrund der Massenstrom-Druck-Korrelation und der begrenzten Fähigkeit der Pumpe, Massenstrom-Gradienten beliebig bereitzustellen, führt dies zu Druckschwankungen in der Förderleitung, die insbesondere bei Verwendung von Druckzerstäuberdüsen unerwünscht sind. Der begrenzte Massenstrom-Gradient kann aber auch bei luftunterstützten Zerstäubern problematisch sein, weil eben der Massenstrom langsamer verändert wird, als dies beispielsweise zum Erreichen eines Leistungsgradienten einer Gasturbinenanlage notwendig wäre. Ferner werden alle Drossel- und Absperrorgane 36, 45a, 45b, 45c über Steuerleitungen 91a, 91b, 91c, 92 von einer zentralen Steuereinheit 90 gesteuert und können so zeitsynchron angesteuert und verstellt werden. Eingangsgröße für die zentrale Steuereinheit 90 ist, wie hier dargestellt, beispielsweise eine Regelabweichung der Leistung einer Gasturbinenanlage. Ist die zu erbringende Soll-Leistung Pₛₒₗₗ größer als die Ist-Nutzleistung Pᵢₛₜ der Gasturbine, so wird hier über die zentrale Steuereinheit die Wassereindüsung durch Hinzuschalten einer Düsengruppe erhöht, d.h. das betreffende 2/2-Wege-Ventil 45a, 45b oder 45c wird geöffnet. Soll umgekehrt die Ist-Leistung vermindert werden, so wird die Eindüsung von Wasser über ein oder mehrere der Düsengruppen 41a, 41b, 41c durch Schließen des betreffenden 2/2-Wege-Ventils 45a, 45b oder 45c abgeschaltet. Gleichzeitig mit dem Zuschalten oder Abschalten einer oder mehrerer Düsengruppen wird das stufenlos verstellbare Stellorgan 36 von der zentralen Steuereinheit 90 so angesteuert und entweder geöffnet oder geschlossen, dass veränderte Zerstäubungsmassenstrom durch die Massenstromveränderung in der Ableitleitung kompensiert wird. Idealerweise wird die Stellung des Stellorgans 36 derart verändert, dass der über die Abzweigleitung 35 rezirkulierte Massenstrom sich betragsmäßig entsprechend der Veränderung des eingedüsten Massenstroms verändert, dabei aber mit entgegengesetztem Vorzeichen. Damit bleibt der von der Pumpe 20 geförderte Massenstrom konstant. Die Soll-Leistungswerte und Ist-Leistungswerte werden der Steuereinheit 90 gemäss der dargestellten Ausführungsform von einer Gasturbinen-Regelung vorgegeben. Die Steuereinheit 90 ermittelt aus diesen vorgegebenen Soll- und Ist-Leistungswerten Steuersignale für die Eindüsung. Alternativ kann die Gasturbinen-Regelung auch aus einer Abweichung der Leistung oder auch aus Temperatur- und Druckmesswerten einen Sollmassenstrom oder ein Massenstrom-Delta für den zu zerstäubenden Massenstrom ermitteln, welcher oder welches dann als Eingangsgröße an die Steuerungseinheit 90 geht.

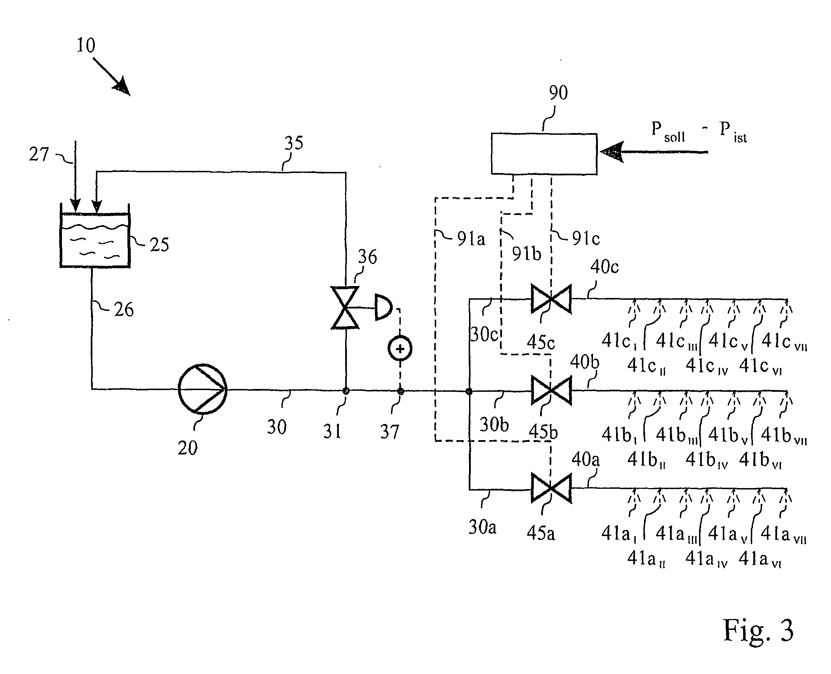

Während die Ansteuerung des Absperrventils 36 gemäß Figur 2 von einer zentralen Steuereinheit aus erfolgt, erfolgt die Ansteuerung des Stellorgans 36 in der Ausführung der Erfindung gemäß Figur 3 über eine integrierte Druckregelung des Förderleitungsdrucks. Hierzu ist in der Förderleitung stromab der Abzweigung der Abzweigleitung von der Förderleitung eine Druckmessstelle 37 zur Messung des Flüssigkeitsdrucks in der Förderleitung angeordnet. Abhängig von dem gemessenen Druck wird das Stellorgan 36, welches vorliegend als Druckregelventil (Darstellung in Figur 3 gemäß DIN 2481) ausgeführt ist, betätigt. Liegt der gemessene Druck unter einem Druck-Sollwert, wird das Stellorgan 36 soweit geschlossen und die durch die Abzweigleitung 35 strömende Flüssigkeitsmenge hierdurch soweit vermindert, dass der gemessene Druck dem Druck-Sollwert entspricht. Liegt umgekehrt der gemessene Druck über dem Druck-Sollwert, wird das Stellorgan 36 weiter geöffnet. Die Regelung des in der Förderleitung stromab der Abzweigstelle anliegenden Flüssigkeitsdrucks erfolgt somit integriert ohne externen steuernden Eingriff. Die Pumpe 20 arbeitet dabei in einem stationären Betriebspunkt weiter.

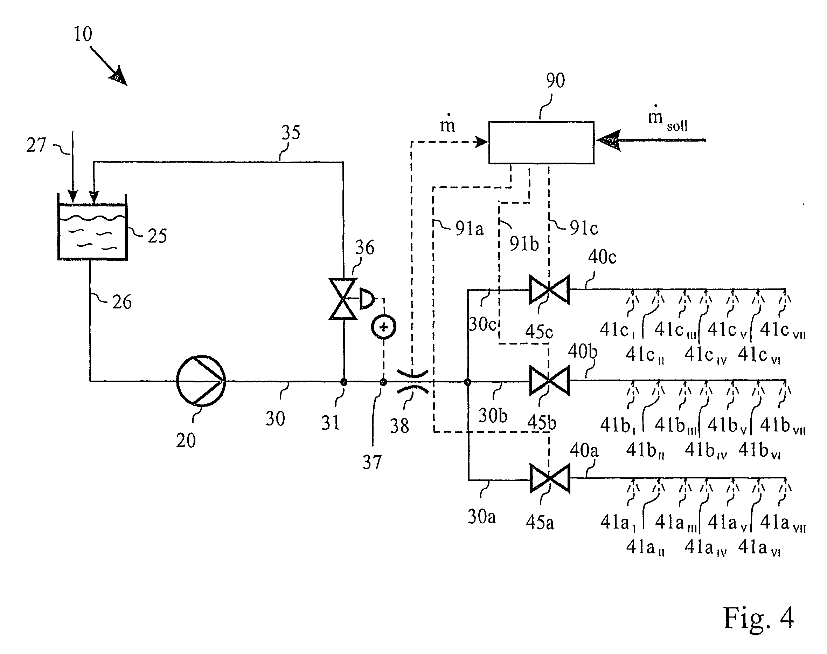

Bei der Ausführungsform gemäss Figur 4 werden die einzelnen Düsengruppen mit dem einzudüsenden Flüssigkeitsmassenstrom anstatt einer Leistung als Regelgröße angesteuert. Dazu ist stromab der Abzweigung der Abzweigleitung und stromauf der Verzweigung in die Einzel-Förderleitungen eine Massenstrommessstelle 38 in der Förderleitung angeordnet, welche den Einspritzmassenstrom ṁ erfasst. Die erfasste Messgröße wird in der Steuereinheit mit einem Massenstrom-Sollwert ṁₛₒₗₗ verglichen. Wenn der Istwert unter dem Sollwert liegt, wird eines der Stellorgane 45a bis 45c geöffnet. Wenn der Istwert über dem Sollwert liegt, wird eines dieser Stellorgane geschlossen. Während dieser Steuervorgänge wird an der Druckmessstelle 37 der Druck in der Zuströmleitung gemessen, und auf die oben beschriebene Weise durch Eingriffe auf das Stellorgan 36 auf einen konstanten Wert eingeregelt.

Die Fördereinrichtungen der in den in den Figuren 2, 3 und 4 dargestellten Ausführungsbeispiele der erfindungsgemäßen Fördervorrichtung sind hier jeweils als Pumpen 20 ausgebildet und werden im Wesentlichen kontinuierlich betrieben. D.h. die Pumpen fördern jeweils mit konstanter Pumpendrehzahl unabhängig von dem tatsächlich einzudüsenden Flüssigkeitsmassenstrom und dem somit bereitzustellenden Flüssigkeitsmassenstrom kontinuierlich Wasser aus den Zulaufleitungen 26 in die Förderleitungen 30. Die Erfindung umfasst aber auch eine Betriebsweise der Fördereinrichtung, bei der die Förderleistung der Fördereinrichtung bei Veränderung des einzudüsenden Massenstroms (veränderter Bedarf) langsam nachgeregelt wird. Die Nachregelung erfolgt aber über einen deutlich längeren Zeitraum als der Zeitraum der Bedarfsänderung. Die jeweilige Pumpe 20 ist somit im Wesentlichen nur einmal auf einen Nennbetriebspunkt hochzufahren. Während des Hochfahrens der Pumpe 20 sind die Absperrorgane 45a, 45b, 45c der Einzel-Förderleitungen 30a, 30b, 30c zunächst verschlossen. Somit gelangt während des Hochfahrens der Pumpe keine Flüssigkeit zu den Düsengruppen 40a, 40b, 40c. Das Stellorgan 36 einer Abzweigleitung 35 hingegen ist während des Hochfahrens der Pumpe 20 geöffnet. Die von der Pumpe 20 in die Förderleitung 30 geförderte Flüssigkeit kann somit über die Abzweigleitung 35 rezirkulieren. Die Zerstäubungsvorrichtung ist danach vollumfänglich betriebsbereit. Nach dem Hochfahren fördert die Pumpe 20 einen ausreichenden Flüssigkeitsmassenstrom mit einem konstanten und für eine gute Zerstäubung hinreichenden Vordruck. Ab diesem Zeitpunkt können die Absperrorgane 45a, 45b, 45c der Einzel-Förderleitungen 30a, 30b, 30c bedarfsgemäß und entsprechend einem spezifisch vorzugebenden Betriebskonzept teilweise oder auch vollständig, einzeln oder gemeinsam geöffnet werden und die Eindüsung von Flüssigkeit über die Düsenöffnungen 41a_{I}, 41a_{II}, ...41a_{VII}; 41b_{I}, 41b_{II}, ...41b_{VII}; 41c_{I}, 41c_{II}, ...41c_{VII} der Düsengruppen 40a, 40b, 40c gestartet werden. Außer während eines kurzen Zeitraums, in dem sich die Zuleitung der jeweils zugeschalteten Düsengruppe 40a, 40b, 40c zunächst mit Flüssigkeit füllt, erfolgt der Start der Eindüsung über die jeweils zugeschaltete Düsengruppe praktisch sprungartig, d.h. praktisch ohne Anlaufverzögerung. Wird die Eindüsung von Flüssigkeit über eine oder mehrere der Einzel-Förderleitungen 30a, 30b, 30c gestartet, so wird das Stellorgan 36 der Abzweigleitung 35 zumindest teilweise geschlossen, um die Rezirkulation von Wasser aus der Förderleitung 30 in den Vorratsbehälter 25 zumindest zu vermindern. Besonders vorteilhaft wird hierbei das Stellorgan 36 in genau solch einem Maße geschlossen und die Rezirkulation von Flüssigkeit hierdurch vermindert, daß der Vordruck in der Förderleitung 30 auch nach dem Öffnen der Absperrorgane 45a, 45b, 45c der Einzel-Förderleitungen 30a, 30b, 30c bei im wesentlichen konstantem Fördermassenstrom der Pumpe 20 konstant oder nahezu konstant bleibt. Näherungsweise läßt sich dies in einfacher Weise dadurch erzielen, daß ein gleich großer Strömungsquerschnitt in der Abzweigleitung 35 durch Schließen des Stellorgans 36 der Abzweigleitung 35 versperrt wird, wie in den Einzel-Förderleitungen 30a, 30b, 30c durch Öffnen der Absperrorgane 45a, 45b, 45c der Einzel-Förderleitungen 30a, 30b, 30c freigegeben wird, derart, dass die Veränderung des eingedüsten Massenstroms durch die Veränderung des rezirkulierten Massenstroms betragsmäßig kompensiert wird. Soll in einem weiteren Schritt der eingedüste oder eingespritzte Flüssigkeitsmassenstrom erhöht werden, so werden ein oder mehrere Düsen oder Düsengruppen zugeschaltet. Mit dem Zuschalten der Düsengruppen wird sprunghaft ein insgesamt höherer Flüssigkeitsmassenstrom erforderlich. Dies wird bereitgestellt, indem das Stellorgan 36 der Abzweigleitung 35 zeitsynchron zum Zuschalten der Düsengruppen weiter geschlossen wird und somit weniger Flüssigkeit durch die Abzweigleitung 35 rezirkuliert. Hierdurch wird sprungartig der Massenstrom in der Förderleitung 30 hinter der Abzweigstelle 31 sowie im Bereich der Zerstäuberdüsen erhöht. Zur Erhöhung des eingedüsten Massenstroms ist es somit nicht erforderlich, den von der Pumpe 20 geförderten Massenstrom zu erhöhen, was nur mit Zeitverzögerung erfolgen kann. Umgekehrt wird bei einer Verminderung des einzudüsenden Flüssigkeitsmassenstroms in der Förderleitung 30 hinter der Abzweigstelle 31 das Stellorgan 36 der Abzweigleitung 35 teilweise oder vollständig geöffnet, so daß ein grösserer Flüssigkeitsmassenstrom durch die Abzweigleitung 35 rezirkuliert.

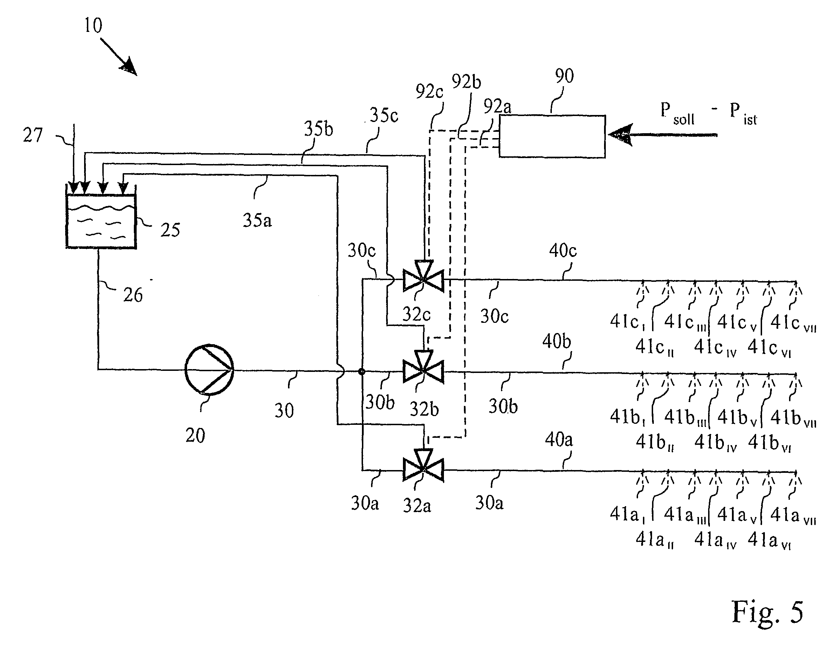

In Figur 5 ist in einer schematischen Darstellung eine weitere Ausführungsform der erfindungsgemäßen Fördervorrichtung dargestellt. Bei der Vorrichtung gemäss dem in Figur 5 dargestellten Beispiel weist jede der Einzel-Förderleitungen 30a, 30b, 30c eine Abzweigleitung auf. Die Einzel-Abzweigleitungen 35a, 35b und 35c sind mittels 3/2-Wege-Stellorganen 32a, 32b und 32c an den Einzel-Förderleitungen 30a, 30b und 30c angeschlossen. Die 3/2-Wege-Stellorgane ermöglichen es, einen von der Fördereinrichtung, hier der Pumpe 20, geförderten Flüssigkeitsmassenstrom entweder zu den Zerstäubungselementen 41 oder in die Abzweigleitungen zu führen. Dies kann als kontinuierliche oder diskontinuierliche Umschaltfunktion realisiert sein. Wenn es sich bei den Zerstäubungselementen 41 um Druckzerstäuberdüsen handelt, findet bevorzugt eine diskontinuierliche Umschaltfunktion Anwendung, bei der der Teilmassenstrom einer Einzelförderleitung gesamthaft entweder zu den Zerstäubungselementen oder zur Abzweigleitung strömt. Bei einer kontinuierlichen Umschaltung ist dieser Teilmassenstrom aufteilbar; dies findet bevorzugt in Verbindung mit hilfsmedienunterstützten Zerstäubern Anwendung. Jede Einzel-Förderleitung 30a, 30b, 30c dient wiederum der Anspeisung einer Düsengruppe 40a, 40b, 40c. Jede Düsengruppe 40a, 40b, 40c umfasst jeweils 7 Düsenöffnungen 41a_{I}, 41a_{II}, ...41a_{VII}; 41b_{I}, 41b_{II}, ...41b_{VII} sowie 41c_{I}, 41c_{II}, ...41cVII. . Prinzipiell wäre es auch möglich, stromab der Umschaltorgane 32a, 32b und 32c und stromauf der Düsen jeweils noch Drosselelemente anzuordnen, welche es ermöglichen, den Zerstäubungsvordruck der Düsengruppen individuell einzustellen. Die Stellorgane, Wegeventile, werden über Steuerleitungen 92a, 92b, 92c von einer zentralen Steuerungseinheit 90 gesteuert, um beispielsweise mittels der eingedüsten Flüssigkeitsmenge die Regelabweichung Pₛₒₗₗ₋Pᵢₛₜ der Leistung einer Kraftmaschine, in deren Zuströmkanal die Zerstäuberdüsen angeordnet sind, auszuregeln. Sowohl der Start der Wassereindüsung als auch eine sprunghafte Erhöhung oder Verminderung der einzudüsenden Wassermenge erfolgt auch bei dieser Ausführungsform praktisch verzögerungsfrei durch Umschalten der 3/2-Wege-Stellorgane 32a, 32b, und 32c.

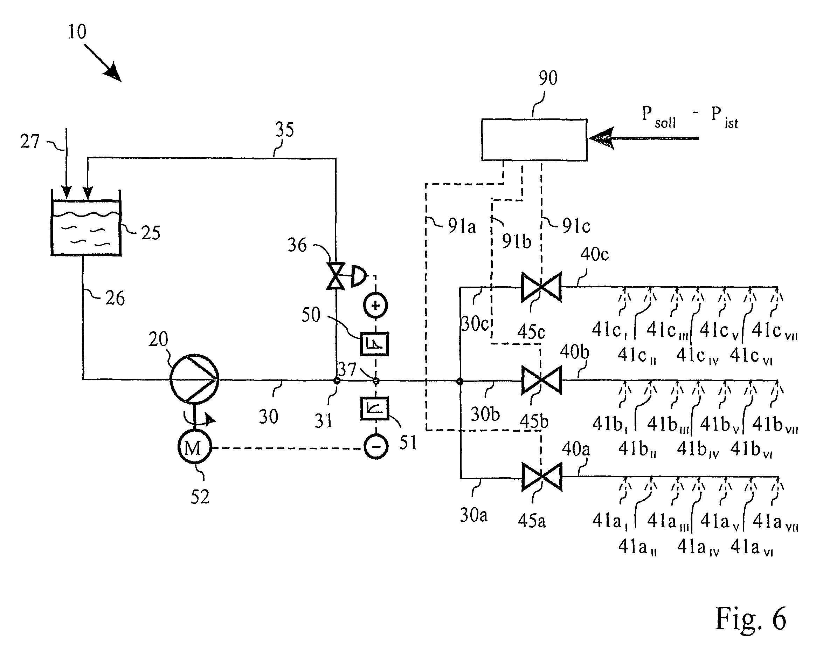

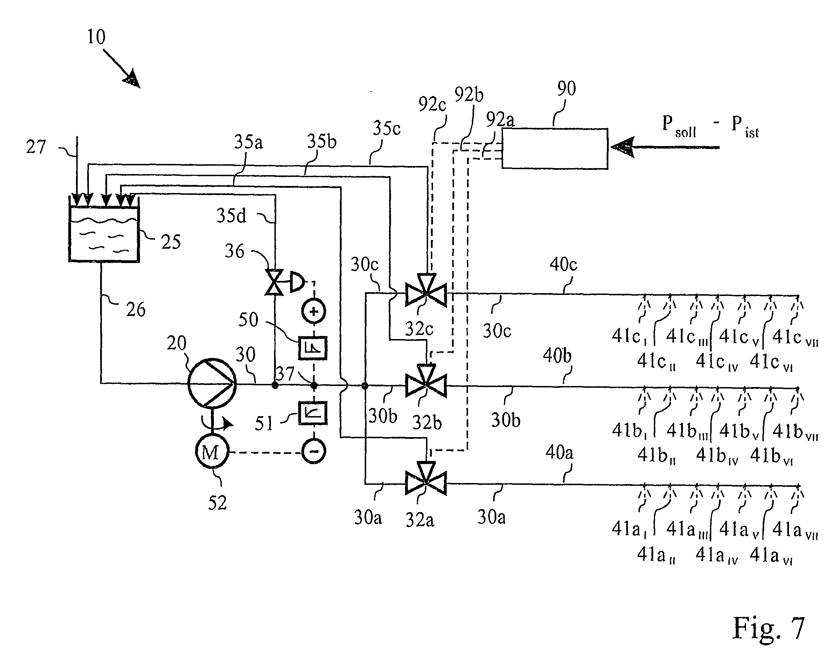

Die Figuren 6 und 7 zeigen weitere Ausführungsformen der erfindungsgemäßen Fördervorrichtung mit einer zweckmäßig weitergebildeten Regelung des Zerstäubungsvordrucks. Gemäss Figur 6 werden die Düsengruppen über Absperrorgane 45a, 45b, und 45c selektiv mit Flüssigkeit beaufschlagt. Stromauf der Verzweigung der Förderleitung 30 in die Einzel-Förderleitungen 30a, 30b, 30c zweigt die Abzweigleitung 35 von der Förderleitung 30 ab. Der in der Abzweigleitung 35 geführte Flüssigkeitsmassenstrom ist über das Stellorgan 36 regelbar, welches vorliegend als Druckregelventil zur Regelung des Drucks an der Druckmessstelle 37 ausgeführt ist. Dabei erfolgt die Ansteuerung des Stellorgans 36 über einen Hochpassfilter 53, derart, dass die Eingangsgröße der über das Stellorgan 36 erfolgenden Druckregelung schnelle Änderungen des an der Messstelle 37 anliegenden Druckes sind. Weiterhin wird das Druckmesssignal über einen Tiefpassfilter 54 zu einem drehzahlregelbaren Antrieb 55 der Pumpe 20 geführt. In dieser Regelung wird die Antriebsdrehzahl erhöht, wenn der tiefpassgefilterte Druckmesswert sinkt, und umgekehrt wird bei steigendem Druck die Antriebsdrehzahl vermindert. Gemäss dieser Ausführungsform dient also der an der Druckmessstelle 37 gemessene Druck als Regelgröße einerseits über den Hochpass 50 zur Verstellung des Stellorgans 36 als auch andererseits über den Tiefpass 51 zur Regelung der Drehzahl der Pumpe. Das Stellorgan 36 regelt somit hochfrequente Druckschwankungen, wie sie beispielsweise beim Zu- und Abschalten von Düsen, Düsengruppen 41a, 41b oder 41c verursacht werden, schnell aus. Tieffrequente, d.h. längerfristige Druckschwankungen werden hingegen von der Pumpe ausgeregelt. Wird nun eine Düse oder Düsengruppe hinzugeschaltet oder auch abgeschaltet, so reagiert das Stellorgan 36 sehr schnell auf die Veränderung, und stellt den Zerstäuberdüsen sofort einen erhöhten Flüssigkeitsmassenstrom zur Verfügung. Über den Tiefpassfilter wirkt die sprunghaft veränderte Massenstromanforderung auf den drehzahlregelbaren Antrieb 52 der Pumpe 20. Somit führt die Beschaltung dazu, dass die Pumpe längerfristig einen erhöhten oder verminderten Wassermassenstrom liefert. Das Stellorgan 36 kann somit längerfristig wieder die ursprüngliche Ausgangsstellung einnehmen. Dabei kann eine bestimmte Öffnung des Stellorgans 36 als Sollwert vorgegeben werden, derart, dass im stationären Betrieb stets ein bestimmter Massenstrom rezirkuliert. Das heisst, der Förderstrom der Pumpe liegt im stationären Betrieb stets über dem aktuell einzudüsenden Flüssigkeitsmassenstrom. In diesem Sinne werden Veränderungen des einzudüsenden Flüssigkeitsmassenstroms von der Pumpe mit drehzahlregelbarem Antrieb verzögert nachvollzogen. Dabei stellt die Öffnung des Stellorgans 36 sicher, dass die Pumpe im stationären Betrieb immer einen größeren Massenstrom fördert, als tatsächlich eingedüst wird. Dieser übersteigende Massenstrom steht als Regelmarge zur Verfügung, welche bei sprungartiger Steigerung des einzudüsenden Massenstroms durch Schließen des Stellorgans 36 kurzfristig zur Eindüsung zur Verfügung gestellt werden kann. Zur Veränderung des eingedüsten Flüssigkeitsmassenstroms wird eines der Absperrorgane 45a, 45b und 45c geöffnet oder geschlossen. Aufgrund der Korrelation von Druck und Massenstrom führt dies zu einer sprunghaften Veränderung des Druckes an der Messstelle 37. Wenn ein Absperrorgan geöffnet wird, fällt der Druck bei unverändertem Massenstrom sprunghaft ab. Aufgrund der Hochpassfilterung des Messsignals reagiert das Stellorgan 36 unmittelbar auf die Veränderung, und wird weiter geschlossen. Damit strömt weniger Flüssigkeit über die Abströmleitung 35 ab, und damit steigt der Massenstrom und letztlich der Druck in der Förderleitung 30 stromab der Verzweigung 31. Der Antrieb 52 der Pumpe reagiert aufgrund der Tiefpassfilterung nur langsam. Aufgrund der Hochpassfilterung des Druckmesssignals geht das Stellorgan 36 langsam wieder in seine Ausgangsstellung zurück. Der dadurch verursachte langsame Druckabfall wirkt aufgrund der Hochpassfilterung nicht oder nur gering auf das Stellorgan 36, vermag aber über die Tiefpassfilterung auf den drehzahlregelbaren Antrieb 52 der Pumpe 20 zu wirken. Deren Drehzahl wird erhöht, und der bei gleichem Druck geförderte Gesamtmassenstrom steigt, wobei im stationären Betrieb wieder ein Massenstrom gefördert wird, der den zur Eindüsung geforderten übersteigt. Der übersteigende Massenstrom wird über die Abzweigleitung 35 rezirkuliert, und steht als Regelmarge für eine schnelle Reaktion zur Verfügung. Wenn umgekehrt ein Absperrorgan geschlossen wird, steigt der Druck bei unverändertem Massenstrom sprunghaft an. Aufgrund der Hochpassfilterung des Messsignals reagiert das Stellglied 36 unmittelbar auf die Veränderung, und wird weiter geöffnet. Damit strömt mehr Flüssigkeit über die Abströmleitung 35 ab, und damit sinkt der Massenstrom und letztlich der Druck in der Förderleitung 30 stromab der Verzweigung 31. Der Antrieb 52 der Pumpe reagiert aufgrund der Tiefpassfilterung nur langsam. Aufgrund der Hochpassfilterung des Druckmesssignals geht das Stellorgan 36 langsam wieder in seine Ausgangsstellung zurück. Der dadurch verursachte langsame Druckanstieg wirkt aufgrund der Hochpassfilterung nicht oder nur gering auf das Stellorgan 36, vermag aber über die Tiefpassfilterung auf den drehzahlregelbaren Antrieb 52 der Pumpe 20 zu wirken. Deren Drehzahl wird vermindert, und der bei gleichem Druck geförderte Gesamtmassenstrom und damit die Leistungsaufnahme des Pumpenantriebs sinken. Die in Figur 6 dargestellte Druckregelung stellt also einerseits sicher, dass die Pumpe in einem Betriebspunkt arbeitet, bei dem sie einen Massenstrom fördert, der eine sofortige und spontane Steigerung des einzudüsenden Flüssigkeitsmassenstroms ermöglicht, andererseits aber die Leistungsaufnahme der Pumpe zur Reservenbereitstellung begrenzt wird.

Figur 7 illustriert diese Druckregelung im Kontext einer in Figur 5 dargestellten und oben beschriebenen Vorrichtung, bei der jede Einzel-Förderleitung 30a, 30b, 30c einer Düsengruppe mit einer Ableitleitung verbunden ist. Hierzu zweigt stromauf der Verzweigung der Förderleitung 30 in die Einzel-Förderleitungen 30a, 30b, 30c eine weitere Abzweigleitung 35d von der Förderleitung 30 ab. Die weitere Abzweigleitung 35d mündet in das Reservoir 25. In die Abzweigleitung 35d ist ferner ein stufenlos verstellbares Stellorgan 36 integriert, mittels dem die Abzweigleitung 35d stufenlos geöffnet und geschlossen werden kann. Zusätzlich ist stromab der Abzweigung der weiteren Abzweigleitung 35d von der Förderleitung 30 eine Druckmessstelle 37 angeordnet, mit der der Flüssigkeitsdruck in der Förderleitung 30 gemessen wird. An diese Druckmessstelle 37 angeschlossen sind einerseits ein Hochpassfilter 50 als auch andererseits ein Tiefpassfilter 51. Der Ausgang des Hochpassfilters 50 ist mit dem als Druckregelventil ausgebildeten Stellorgan 36 verbunden. Über den Tiefpassfilter 51 wirkt das gemessene Drucksignal auf einen drehzahlregelbaren Antrieb 52 der Pumpe 20. Der von der Druckmessstelle 37 gemessene Druck dient somit als Regelgröße einerseits über den Hochpass 50 zur Verstellung des Stellorgans 36 als auch andererseits über den Tiefpass 51 zur Regelung der Drehzahl der Pumpe. Das Stellorgan 36 regelt somit hochfrequente Druckschwankungen, wie sie beispielsweise beim Zu- und Abschalten von Düsen oder Düsengruppen 41a, 41b oder 41c verursacht werden, aus. Tieffrequente, d.h. längerfristige Druckschwankungen werden hingegen von der Pumpe ausgeregelt. Wird nun eine Düse oder Düsengruppe hinzugeschaltet oder auch abgeschaltet, so wird ein veränderter Flüssigkeitsmassenstrombedarf zunächst sehr schnell über die weitere Abzweigleitung 35d und das Stellorgan 36 ausgeregelt. Der längerfristig veränderte Flüssigkeitsbedarf wird jedoch auch über den Tiefpassfilter 51 dem Antrieb 52 der Pumpe 20 beaufschlagt und führt hier zu einer Veränderung, d.h. Erhöhung oder Verminderung, der Pumpendrehzahl. Somit führt die Beschaltung dazu, dass die Pumpe längerfristig einen erhöhten oder verminderten Flüssigkeitsmassenstrom liefert. Das Stellorgan 36 kann somit, wie oben beschrieben, längerfristig wieder die ursprüngliche Ausgangsstellung einnehmen.

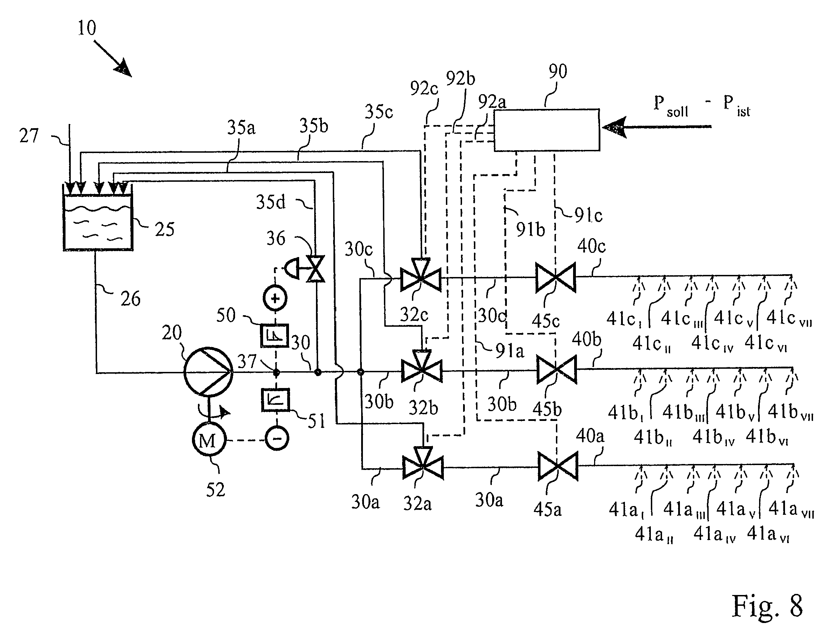

In Figur 8 ist eine weitere erfindungsgemäß ausgebildete Fördervorrichtung mit einer ähnlich zu Figur 7 weitergebildeten Druckregelung dargestellt. Im Gegensatz zu der in Figur 7 dargestellten Ausführung liegt die Druckmessstelle 37 in der in Figur 8 dargestellten Fördervorrichtung stromauf der Abzweigung der Abzweigleitung 35d von der Förderleitung 30. Der von der Druckmessstelle 37 gemessene Druck dient auch hier wiederum als Regelgröße einerseits über den Hochpass 50 zur Verstellung des Stellorgans 36 als auch andererseits über den Tiefpass 51 zur Regelung der Drehzahl und somit der Fördermenge der Pumpe 20. In der in Figur 8 dargestellten Fördervorrichtung ist ferner zusätzlich in jeder Einzel-Förderleitung 30a, 30b, 30c jeweils ein Absperrelement 45a, 45b und 45c angeordnet.

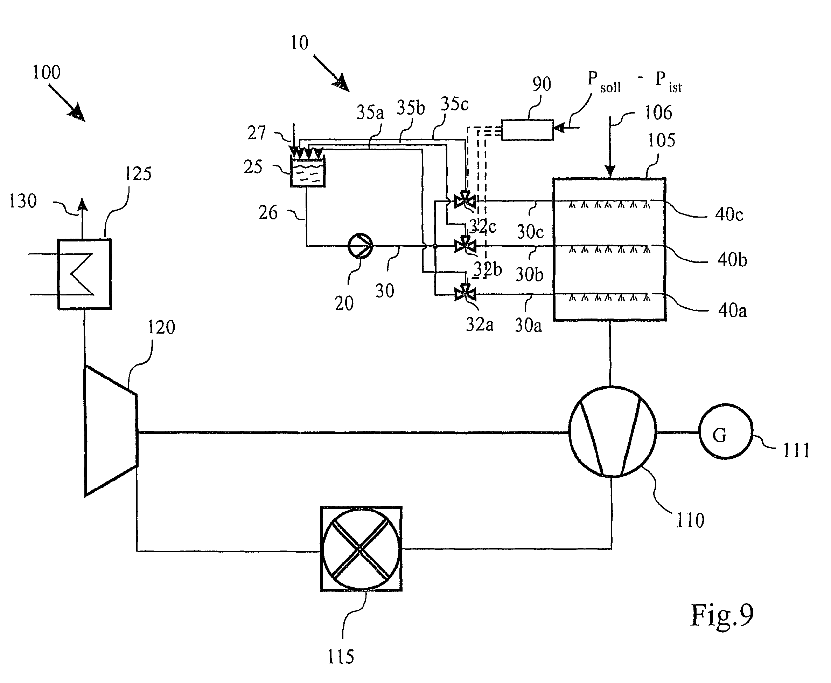

Figur 9 zeigt in einer weiteren schematischen Darstellung eine Gasturbinenanlage 100 mit einer Flüssigkeitseinspritzanlage, die von einer erfindungsgemäßen Fördervorrichtung 10 mit Flüssigkeit, beispielsweise Wasser, versorgt wird. Die Gasturbinenanlage 100 umfaßt einen Verdichter 110, Generator 111, eine Brennkammer 115, eine Turbine 120 sowie einen Abgaswärmetauscher 125. Der Abgaswärmetauscher 125 ist optional, d.h. er kann je nach Ausführung der Gasturbinenanlage auch entfallen. Der Lufteintritt ist in Figur 9 mit 106, der Abgasaustritt mit 130 gekennzeichnet. Vor dem Verdichter 110 ist in der in Figur 9 dargestellten Gasturbinenanlage 100 eine Eindüsungsvorrichtung 105 zur Eindüsung von Wasser in die Verdichtereintrittsströmung angeordnet. Die Eindüsungsvorrichtung 105 kann in den Ansaugkanal vor dem Verdichter integriert sein. Die Eindüsungsvorrichtung 105 umfaßt hier beispielhaft und stark vereinfacht drei Düsengruppen 40a, 40b, 40c mit jeweils einer Anzahl von über dem Strömungsquerschnitt der Verdichterströmung in geeigneter Weise verteilt angeordneten Düsenöffnungen zur Eindüsung von Wasser in die Eintrittsströmung 106. Die Düsengruppen können beispielsweise auch auf einem oder mehreren konzentrischen Düsenringen angeordnet sein. Die Düsengruppen wiederum sind über die Förderleitungen 30, 30a, 30b, 30c mit einer Pumpe 20 und diese Pumpe 20 wiederum über die Zuleitung 26 mit einem Wasservorratstank 25 verbunden. Dieser wird von einer nicht dargestellten Wasseraufbereitungsvorrichtung zur Bereitstellung von gereinigtem und entmineralisieren Wasser beschickt. Die Pumpe 20 saugt Wasser aus dem Vorratstank 25 an und pumpt dieses in die Förderleitung 30, die sich in die Einzel-Förderleitungen 30a, 30b, 30c aufteilt. In jede der Einzel-Förderleitungen 30a, 30b, 30c ist jeweils ein 3/2-Wege-Ventile 32a, 32b, 32c integriert, wobei der jeweils zweite Ausgang der 3/2-Wege-Ventile 32a, 32b, 32c mit je einer Abzweigleitung 35a, 35b, 35c verbunden ist. Die Abzweigleitungen 35a, 35b, 35c führen jeweils zurück in den Vorratstank 25. Der Steuereinheit 90 werden Leistungswerte von einer Gasturbinen-Regelung vorgegeben. Die Steuereinheit 90 ermittelt gemäss einer Ausführungsform aus der Soll-Istwert-Abweichung Steuersignale für die Eindüsung, derart, dass bei einer negativen Soll-Istwert-Abweichung der Leistung Pₛₒₗₗ-Pᵢₛₜ selektiv wenigstens eine Düse und/oder Düsengruppe zusätzlich mit Flüssigkeit beaufschlagt wird, um den eingedüsten Massenstrom zu erhöhen, und bei einer positiven Soll-Istwert-Abweichung, bei der also die Ist-Leistung größer ist als der Leistungssollwert, wird selektiv die Flüssigkeitszufuhr zu wenigstens einer Düse und/oder Düsengruppe abgeschaltet. Alternativ kann die Gasturbinen-Regelung auch aus einer Abweichung der Leistung oder auch aus Temperatur- und Druckmesswerten einen Sollmassenstrom oder ein Massenstrom-Delta für den zu zerstäubenden Massenstrom ermitteln, welches dann als Eingangsgröße an die Steuerungseinheit 90 geht. Um die Eindüsung von Flüssigkeit in die Verdichtereintrittsströmung beginnen zu können, wird die Pumpe 20 zunächst in einem Anlaufvorgang hochgefahren. Hierzu sind die mit den Einzel-Abzweigleitungen 35a, 35b, 35c verbundenen Ausgänge der 3/2-Wege-Ventile 32a, 32b, 32c geöffnet. Von der Pumpe 20 während des Anlaufvorgangs gefördertes Wasser gelangt somit über die Abzweigleitungen 35a, 35b, 35c zurück in den Vorratstank 25. Nach dem Hochlaufen der Pumpe 20 fördert die Pumpe kontinuierlich Wasser aus dem Vorratstank 25 in die Förderleitung 30 unabhängig von dem jeweils in die Verdichterströmung eingedüsten Flüssigkeitsmassenstrom. Soll nach dem Hochfahren der Pumpe 20 die Eindüsung von Flüssigkeit in die Eintrittsströmung des Verdichters gestartet werden, so wird wenigstens eines der 3/2-Wege-Ventile 32a, 32b, 32c umgeschaltet, und damit der Strömungsweg über die entsprechende Abzweigleitung unterbrochen und gleichzeitig der Strömungsweg zu der entsprechenden Düse oder Düsengruppe freigegeben. Damit wird einfach der Flüssigkeitsmassenstrom, welcher zuvor über die Ableitleitung rezirkuliert wurde, zu den Düsen umgeleitet. Der gesamte Fördermassenstrom der Pumpe bleibt bei zweckmäßiger Auslegung der Strömungsquerschnitte wenigstens in erster Näherung konstant, derart, dass die Pumpe keine transiente Veränderung des Betriebszustandes nachvollziehen muss. Auf diese Weise kann der in die VerdichterEintrittsströmung eingedüste Flüssigkeitsmassenstrom auch sprunghaft verändert werden, ohne auf die Dynamik der Pumpe Rücksicht nehmen zu müssen, welche selbstverständlich nur endliche Massenstromgradienten zur Verfügung zu stellen vermag. Dies ist insbesondere auch dann wichtig, wenn die Gasturbogruppe 100 beispielsweise im sogenannten Frequenzstützungsbetrieb arbeitet, in dem steile Leistungsgradienten erbracht werden müssen.

Selbstverständlich ermöglicht die Erfindung auch andere Ausführungsformen und Abwandlungen der dargestellten Beispiele, welche im Umfang der durch die Patentansprüche gekennzeichneten Erfindung enthalten sind. Insbesondere ist mit grösstem Vorteil und nahezu zwingend bei allen oben beschriebenen Ausführungsformen in den Abzweigleitungen ein nicht dargestelltes geeignetes Mittel zur Kühlung des rezirkulierten Fluides angeordnet.

### Bezugszeichenliste

- 1: Ist-Massenstromverlauf einer herkömmlichen Fördervorrichtung
- 2: Soll-Massentromverlauf
- 10: Fördervorrichtung
- 20: Fördereinrichtung, Pumpe
- 25: Vorratsbehälter
- 26: Zulaufleitung
- 27: Zuleitung
- 30, 30a,30b, 30c: Förderleitung
- 31: Abzweigung (T-Element)
- 32a, 32b,32c: Abzweigung (3/2-Wege-Ventil)
- 35, 35a,35b, 35c, 35d: Abzweigleitung
- 36: Stellorgan
- 37: Druckmessstelle
- 38: Massenstrommessstelle
- 40a, 40b,40c: Düsenträger, Düsenrohr
- 41a_{I}, 41a_{II}, ...41a_{VII}; 41b_{I}, 41b_{II}, ...41b_{VII}; 41c_{I}, 41c_{II}, ...41c_{VII}: Zerstäubungselement, Düsenöffnung
- 45a, 45b, 45c: Stellorgan
- 50: Hochpassfilter
- 51: Tiefpassfilter
- 52: drehzahlregelbarer Antrieb, Elektromotor
- 90: Steuereinheit
- 91a, 91b, 91c, 92, 92a, 92b, 92c: Steuerleitung
- 100: Gasturbinenanlage
- 105: Eindüsungsvorrichtung
- 106: Lufteintritt
- 110: Verdichter
- 111: Generator
- 115: Brennkammer
- 120: Turbine
- 125: Abgaswärmetauscher
- 130: Abgasaustritt

- ṁ: Massenstrom
- t: Zeit
- Pₛₒₗₗ: Soll-Leistung
- Pᵢₛₜ: Ist-Leistung

## Patentansprüche

1. Vorrichtung (10) zum kontinuierlichen Fördern und nichtintermittierenden Einbringen einer Flüssigkeit in eine Hauptströmung, umfassend eine Zulaufleitung (26), eine Förderleitung (30), eine Fördereinrichtung (20) zur Förderung eines Massenstroms der Flüssigkeit von der Zulaufleitung zur Förderleitung, sowie wenigstens ein mit der Förderleitung kommunizierendes Zerstäubungselement (41), wobei in Förderrichtung stromab der Fördereinrichtung (20) und stromauf des Zerstäubungselementes (41) eine Abzweigleitung (35), die von der Förderleitung abzweigt, angeordnet ist, wobei in Verbindung mit der Abzweigleitung (35) wenigstens ein Umschalt- und/oder Stellorgan (36,32) zum Absperren und/oder Drosseln der Abzweigleitung (35) angeordnet ist,
**dadurch gekennzeichnet, dass**
in der Förderleitung (30) eine Druckmessstelle (37) angeordnet ist, und dass ein erster Druckregler mit dem gemessenen, über einen Hochpassfilter (50) gefilterten Druck als Regelgrösse und der Stellung eines in der Abzweigleitung angeordneten Stellorgans (36) als Stellgrösse und ein zweiter Druckregler mit dem gemessenen, über einen Tiefpassfilter (51) gefilterten Druck als Regelgrösse und der Stellung eines Leistungsreglers der Fördereinrichtung (20) als Stellgrösse beschaltet ist.

2. Vorrichtung gemäss Anspruch 1, **dadurch gekennzeichnet, dass** die Förderleitung (30) in eine Mehrzahl von Einzel-Förderleitungen (30a, 30b, 30c) verzweigt, wobei wenigstens eine der Einzel-Förderleitungen mit einem Zerstäubungselement (41a, 41b, 41c) verbunden ist.

3. Vorrichtung gemäss Anspruch 2, **dadurch gekennzeichnet, dass** in wenigstens einer Einzel-Förderleitung (30a, 30b, 30c), vorzugsweise in jeder Einzel-Förderleitung, ein Absperrorgan (45a, 45b, 45c) angeordnet ist.

4. Vorrichtung gemäss einem der Ansprüche 2 oder 3, **dadurch gekennzeichnet, dass** von wenigstens einer der Einzel-Förderleitungen (30a, 30b, 30c) eine Abzweigleitung (35a, 35b, 35c) abzweigt.

5. Vorrichtung gemäss Anspruch 4, **dadurch gekennzeichnet, dass** von jeder Einzel-Förderleitung (30a, 30b, 30c) eine Abzweigleitung (35a, 35b, 35c) abzweigt.

6. Vorrichtung gemäss einem der vorangehenden Ansprüche, **dadurch gekennzeichnet, dass** das Umschalt- und/oder Stellorgan ein Mehrwegeventil (32), insbesondere ein 3/2-Wegeventil, ist.

7. Vorrichtung gemäss einem der vorhergehenden Ansprüche, **dadurch gekennzeichnet, dass** das Umschalt- und/oder Stellorgan ein in der Abzweigleitung angeordnetes Absperrelement oder Drosselelement ist.

8. Vorrichtung gemäss einem der vorstehenden Ansprüche, **dadurch gekennzeichnet, dass** in der Förderleitung (30) stromab der Abzweigung der Abzweigleitung (35) eine Druckmessstelle (37) angeordnet ist, und dass ein Druckregler mit dem gemessenen Druck als Regelgrösse und der Stellung des Umschalt- und/oder Stellorgans (36) als Stellgrösse beschaltet ist.

9. Vorrichtung gemäss einem der Ansprüche 1 bis 7, **dadurch gekennzeichnet, dass** in der Förderleitung (30) stromab der Abzweigung der Abzweigleitung (35) eine Flüssigkeitsmassenstrommessstelle (38) angeordnet ist, und dass ein Regler mit dem gemessenen Massenstrom als Regelgrösse und der Stellung des Umschalt- und/oder Stellorgans (36) als Stellgrösse beschaltet ist.

10. Wärmekraftmaschine, insbesondere luftatmende Verbrennungskraftmaschine, umfassend eine Vorrichtung gemäss einem der vorstehenden Ansprüche, wobei das wenigstens eine mit der Förderleitung kommunizierende Zerstäubungselement in einem Zuströmkanal der Wärmekraftmaschine angeordnet ist.

11. Gasturbogruppe, umfassend eine Vorrichtung gemäss einem der vorstehenden Ansprüche, wobei das wenigstens eine mit der Förderleitung kommunizierende Zerstäubungselement stromauf einer Verdichterstufe angeordnet ist.

12. Verfahren zum kontinuierlichen Fördern und nichtintermittierenden Einbringen eines Flüssigkeitsmassenstroms in eine Hauptströmung, insbesondere zum Betrieb der Vorrichtung gemäss einem der vorhergehenden Ansprüche, umfassend, einen Fördermassenstrom mittels einer Fördereinrichtung (20) kontinuierlich zu fördern, wenigstens einen Teilmassenstrom des Fördermassenstroms in die Hauptströmung einzubringen, und zur Veränderung des einzubringenden Teilmassenstroms um einen Differenzmassenstrom stromab der Fördereinrichtung einen Abzweigmassenstrom abzuführen, **gekennzeichnet dadurch**, den Fördermassenstrom in eine Förderleitung (30) zu fördern, den Abzweigmassenstrom an einer Abzweigung (31) abzuzweigen, den Druck in der Förderleitung zu messen, den gemessenen Druck mit einem Hochpass (50) zu filtern und den hochpass-gefilterten Druck über den abgezweigten Flüssigkeitsmassenstrom zu regeln, sowie den gemessenen Druck mit einem Tiefpass zu filtern und den tiefpass-gefilterten Druck über den von der Fördereinrichtung (20) geförderten Flüssigkeitsmassenstrom zu regeln.

13. Verfahren nach Anspruch 12, umfassend, den abgezweigten Flüssigkeitsmassenstrom in einer Abzweigleitung zu führen und den abgezweigten Flüssigkeitsmassenstrom über die Stellung eines in der Abzweigleitung angeordneten Stellorgans zu regeln.

14. Verfahren nach Anspruch 12 oder 13, umfassend, zum Verändern des einzubringenden Teilmassenstroms um den Differenzmassenstrom ein oder mehrere Düsenrohre und/oder ein oder mehrere Düsen hinzuzuschalten oder abzuschalten.

15. Verfahren nach einem der Ansprüche 12 bis 14, **dadurch gekennzeichnet, dass** der einzubringende Flüssigkeitsmassenstrom-Sollwert und/oder die Anzahl der beaufschlagten Düsenrohre von einem Leistungsregler einer Kraftmaschine eingestellt wird.

16. Verfahren nach einem der Ansprüche 12 bis 15, weiterhin umfassend, den Abzweigmassenstrom betragsmässig im Wesentlichen um den Differenzmassenstrom zu verändern, mit umgekehrtem Vorzeichen der Veränderung, und den Fördermassenstrom im Wesentlichen konstant zu halten.

17. Verfahren nach einem der Ansprüche 12 bis 16, weiterhin umfassend, den Fördermassenstrom in eine Förderleitung (30) zu fördern, den Abzweigmassenstrom an einer Abzweigung (31) abzuzweigen, stromab der Abzweigung den Druck in der Förderleitung zu messen, und diesen Druck über den abgezweigten Flüssigkeitsmassenstrom zu regeln.

18. Verfahren nach einem der Ansprüche 12 bis 17, umfassend, den Fördermassenstrom in eine Förderleitung (30) zu fördern, den Abzweigmassenstrom an einer Abzweigung (31) abzuzweigen, stromab der Abzweigung den nicht abgezweigten Flüssigkeitsmassenstrom zu messen, und den nicht abgezweigten Flüssigkeitsmassenstrom über den abgezweigten Flüssigkeitsmassenstrom zu regeln.

## Claims

1. Apparatus (10) for continuously delivering and non-intermittently introducing a liquid into a main flow, comprising a supply line (26), a delivery line (30), a delivery device (20) for delivering a mass flow of the liquid from the supply line to the delivery line, and at least one atomizing element (41) communicating with the delivery line, a branch line (35) which branches off from the delivery line being arranged in the delivery direction downstream of the delivery device (20) and upstream of the atomizing element (41), at least one changeover and/or regulating member (36, 32) for shutting off and/or throttling the branch line (35) being arranged in combination with the branch line (35), **characterized in that** a pressure measuring point (37) is arranged in the delivery line (30), and **in that** a first pressure regulator is connected up to the measured pressure, filtered via a high-pass filter (50), as controlled variable and to the position of a regulating member (36), arranged in the branch line, as actuating variable, and a second pressure controller is connected up to the measured pressure, filtered via a low-pass filter (51), as controlled variable and to the position of an output controller of the delivery device (20) as actuating variable.

2. Apparatus according to Claim 1, **characterized in that** the delivery line (30) branches into a plurality of individual delivery lines (30a, 30b, 30c), at least one of the individual delivery lines being connected to an atomizing element (41a, 41b, 41c).

3. Apparatus according to Claim 2, **characterized in that** a shut-off member (45a, 45b, 45c) is arranged in at least one individual delivery line (30a, 30b, 30c), preferably in each individual delivery line.

4. Apparatus according to either of Claims 2 and 3, **characterized in that** a branch line (35a, 35b, 35c) branches off from at least one of the individual delivery lines (30a, 30b, 30c).

5. Apparatus according to Claim 4, **characterized in that** a branch line (35a, 35b, 35c) branches off from each individual delivery line (30a, 30b, 30c).

6. Apparatus according to one of the preceding claims, **characterized in that** the changeover and/or regulating member is a multiway directional control valve (32), in particular a 3/2-way directional control valve.

7. Apparatus according to one of the preceding claims, **characterized in that** the changeover and/or regulating member is a shut-off element or throttle element arranged in the branch line.

8. Apparatus according to one of the preceding claims, **characterized in that** a pressure measuring point (37) is arranged in the delivery line (30) downstream of the branching point of the branch line (35), and **in that** a pressure controller is connected up to the measured pressure as controlled variable and to the position of the changeover and/or regulating member (36) as actuating variable.

9. Apparatus according to one of Claims 1 to 7, **characterized in that** a measuring point (38) for a liquid mass flow is arranged in the delivery line (30) downstream of the branching point of the branch line (35), and **in that** a controller is connected up to the measured mass flow as controlled variable and to the position of the changeover and/or regulating member (36) as actuating variable.

10. Heat engine, in particular an internal combustion engine, comprising an apparatus according to one of the preceding claims, the at least one atomizing element communicating with the delivery line being arranged in an inflow duct of the heat engine.

11. Gas turboset, comprising an apparatus according to one of the preceding claims, the at least one atomizing element communicating with the delivery line being arranged upstream of a compressor stage.

12. Method of continuously delivering and non-intermittently introducing a liquid mass flow into a main flow, in particular for operating Apparatus according to one of the preceding claims, a delivery mass flow being continuously delivered by means of a delivery device (20), at least a partial mass flow of the delivery mass flow being introduced into the main flow, and a branch mass flow being drawn off downstream of the delivery device in order to change the partial mass flow, to be introduced, by a differential mass, **characterized by** the liquid mass flow being delivered into a delivery line (30), the branch mass flow being branched off at a branching point (31), the pressure in the delivery line being measured, the measured pressure being filtered with a high pass (50) and the high-pass-filtered pressure being regulated via the branched-off liquid mass flow, and the measured pressure being filtered with a low pass and the low-pass-filtered pressure being regulated via the liquid mass flow delivered by the delivery device (20).

13. Method according to Claim 12, the branched-off liquid mass flow being conducted in a branch line, and the branched-off liquid mass flow being regulated via the position of a regulating member arranged in the branch line.

14. Method according to Claim 12 or 13, one or more nozzle tubes and/or one or more nozzles being switched on or switched off for changing the partial mass flow, to be introduced, by the differential mass flow.

15. Method according to one of Claims 12 to 14, **characterized in that** the setpoint of the liquid mass flow and/or the number of nozzle tubes to which liquid is admitted are/is set by an output controller of a prime mover.

16. Method according to one of Claims 12 to 15, furthermore the magnitude of the branch mass flow being changed essentially by the differential mass flow, with opposite sign of the change, and the delivery mass flow being kept essentially constant.

17. Method according to one of Claims 12 to 16, furthermore the delivery mass flow being delivered into a delivery line (30), the branch mass flow being branched off at a branching point (31), the pressure in the delivery line being measured downstream of the branching point, and this pressure being regulated via the branched-off liquid mass flow.

18. Method according to one of Claims 12 to 17, the delivery mass flow being delivered into a delivery line (30), the branch mass flow being branched off at a branching point (31), the liquid mass flow which has not been branched off being measured downstream of the branching point, and the liquid mass flow which has not been branched off being regulated via the branched-off liquid mass flow.

## Revendications

1. Dispositif (10) pour refouler et introduire en continu, et de manière non intermittente, un liquide dans un écoulement principal, comprenant une conduite d'amenée (26), une conduite de refoulement (30), un appareil de refoulement (20) pour refouler un débit massique de liquide de la conduite d'amenée à la conduite de refoulement ainsi qu'au moins un élément de pulvérisation (41) communiquant avec la conduite de refoulement, une conduite de branchement (35), qui part de la conduite de refoulement, étant disposée dans la direction de refoulement en aval de l'appareil de refoulement (20) et en amont de l'élément de pulvérisation (41), au moins un organe de commutation et/ou de commande (36, 32) pour couper et/ou étrangler la conduite de branchement (35) étant disposé en liaison avec la conduite de branchement (35),
**caractérisé en ce que**
l'on dispose dans la conduite de refoulement (30) un point de mesure de pression (37) et **en ce qu'**un premier régulateur de pression est mis en circuit avec la pression mesurée filtrée par le biais d'un filtre passe-haut (50) en tant que valeur de réglage et avec la position d'un organe de commande (36) disposé dans la conduite de branchement en tant que valeur de commande, et un deuxième régulateur de pression est mis en circuit avec la pression mesurée filtrée par le biais d'un filtre passe-bas (51) en tant que valeur de réglage et avec la position d'un régulateur de puissance de l'appareil de refoulement (20) en tant que valeur de commande.

2. Dispositif selon la revendication 1, **caractérisé en ce que** la conduite de refoulement (30) se divise en une pluralité de conduites de refoulement individuelles (30a, 30b, 30c), au moins l'une des conduites de refoulement individuelles étant connectée à un élément de pulvérisation (41a, 41b, 41c).

3. Dispositif selon la revendication 2, **caractérisé en ce que** l'on dispose dans au moins une conduite de refoulement individuelle (30a, 30b, 30c) de préférence dans chaque conduite de refoulement individuelle, un organe de coupure (45a, 45b, 45c).

4. Dispositif selon l'une quelconque des revendications 2 ou 3, **caractérisé en ce qu'**une conduite de branchement (35a, 35b, 35c) part d'au moins l'une des conduites de refoulement individuelles (30a, 30b, 30c).

5. Dispositif selon la revendication 4, **caractérisé en ce qu'**une conduite de branchement (35a, 35b, 35c) part de chaque conduite de refoulement individuelle (30a, 30b, 30c).

6. Dispositif selon l'une quelconque des revendications précédentes, **caractérisé en ce que** l'organe de commutation et/ou de commande est une soupape à plusieurs voies (32), notamment une soupape à 3/2 voies.

7. Dispositif selon l'une quelconque des revendications précédentes, **caractérisé en ce que** l'organe de commutation et/ou de commande est un élément de coupure ou d'étranglement disposé dans la conduite de branchement.

8. Dispositif selon l'une quelconque des revendications précédentes, **caractérisé en ce qu'**un point de mesure de pression (37) est disposé dans la conduite de refoulement (30) en aval du branchement de la conduite de branchement (35), et **en ce qu'**un régulateur de pression peut être mis en circuit avec la pression mesurée en tant que valeur de réglage et la position de l'organe de commutation et/ou de commande (36) en tant que valeur de commande.

9. Dispositif selon l'une quelconque des revendications 1 à 7, **caractérisé en ce que** l'on dispose dans la conduite de refoulement (30) en aval du branchement de la conduite de branchement (35) un point de mesure du débit massique de liquide (38) et **en ce qu'**un régulateur est mis en circuit avec le débit massique mesuré en tant que valeur de mesure et la position de l'organe de commutation et/ou de commande (36) en tant que valeur de commande.

10. Centrale thermique, notamment centrale à combustion à air, comprenant un dispositif selon l'une quelconque des revendications précédentes, dans lequel l'au moins un élément de pulvérisation communiquant avec la conduite de refoulement est disposé dans un canal d'afflux de la centrale thermique.

11. Groupe générateur à turbine à gaz, comprenant un dispositif selon l'une quelconque des revendications précédentes, dans lequel l'au moins un élément de pulvérisation communiquant avec la conduite de refoulement est disposé en amont d'un étage du compresseur.

12. Procédé pour refouler et introduire en continu, et de manière non intermittente, un liquide dans un écoulement principal, notamment pour faire fonctionner le dispositif selon l'une quelconque des revendications précédentes, comprenant les étapes constituant à refouler en continu un débit massique de refoulement au moyen d'un appareil de refoulement (20), à introduire au moins un débit massique partiel du débit massique de refoulement dans l'écoulement principal, et, pour modifier le débit massique partiel à introduire par un débit massique différentiel, à évacuer en aval du dispositif de refoulement un débit massique de branchement, **caractérisé en ce que** le débit massique de refoulement est refoulé dans une conduite de refoulement (30), le débit massique de branchement est dévié au niveau d'un branchement (31), la pression dans la conduite de refoulement est mesurée, la pression mesurée est filtrée avec un filtre passe-haut (50) et la pression filtrée par filtre passe-haut est régulée par le biais du débit massique de liquide dévié, et la pression mesurée est filtrée avec un filtre passe-bas, et la pression filtrée par filtre passe-bas est régulée par le biais du débit massique de liquide refoulé par l'appareil de refoulement (20).

13. Procédé selon la revendication 12, comprenant les étapes constituant à guider le débit massique de liquide dévié dans une conduite de branchement et à réguler le débit massique de liquide dévié par le biais de la position d'un organe de commande disposé dans la conduite de branchement.

14. Procédé selon la revendication 12 ou 13, comprenant l'étape consistant à connecter ou couper en plus un ou plusieurs tubes à buses et/ou une ou plusieurs buses pour modifier le débit massique partiel à introduire du débit massique différentiel.

15. Procédé selon l'une quelconque des revendications 12 à 14, **caractérisé en ce que** la valeur de consigne du débit massique de liquide à introduire et/ou le nombre des tubes de buses sollicités sont ajustés par un régulateur de puissance d'une centrale.

16. Procédé selon l'une quelconque des revendications 12 à 15, comprenant en outre l'étape consistant à modifier le débit massique de branchement en volume essentiellement du débit massique différentiel, avec signe contraire de la variation, et à maintenir essentiellement constant le débit massique de refoulement.

17. Procédé selon l'une quelconque des revendications 12 à 16, comprenant en outre les étapes consistant à refouler le débit massique de refoulement dans une conduite de refoulement (30), à dévier le débit massique de branchement au niveau d'un branchement (31), à mesurer en aval du branchement la pression dans la conduite de refoulement, et à réguler cette pression par le biais du débit massique de liquide dévié.

18. Procédé selon l'une quelconque des revendications 12 à 17, comprenant les étapes consistant à refouler le débit massique de refoulement dans une conduite de refoulement (30), à dévier le débit massique de branchement au niveau d'un branchement (31), à mesurer en aval du branchement le débit massique de liquide non dévié, et à réguler le débit massique de liquide non dévié par le biais du débit massique de liquide dévié.
